(19) Europäisches Patentamt / European Patent Office / Office européen des brevets

(11) **EP 3 778 496 B1**

(12) **EUROPEAN PATENT SPECIFICATION**

(45) Date of publication and mention
of the grant of the patent:
**28.08.2024   Bulletin 2024/35**

(21) Application number: **19778405.1**

(22) Date of filing: **08.03.2019**

(51) International Patent Classification (IPC):
*C02F 5/14* *(2023.01)*     *C02F 1/44* *(2023.01)*
*B01D 61/02* *(2006.01)*     *B01D 61/04* *(2006.01)*
*B01D 61/12* *(2006.01)*     *B01D 65/02* *(2006.01)*
*B01D 65/08* *(2006.01)*     *C02F 1/70* *(2023.01)*
*C02F 1/50* *(2023.01)*

(52) Cooperative Patent Classification (CPC):
**B01D 61/025; B01D 61/04; B01D 61/12;**
**B01D 65/02; B01D 65/08; C02F 1/008;**
**C02F 1/441; C02F 5/14;** B01D 2311/04;
B01D 2311/12; B01D 2321/167; C02F 1/50;
C02F 1/70; C02F 2209/001; C02F 2209/04;  (Cont.)

(86) International application number:
**PCT/JP2019/009452**

(87) International publication number:
**WO 2019/188138 (03.10.2019 Gazette 2019/40)**

(54) **WATER TREATMENT METHOD**

VERFAHREN ZUR WASSERBEHANDLUNG

PROCÉDÉ DE TRAITEMENT DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.03.2018   JP 2018060300**

(43) Date of publication of application:
**17.02.2021   Bulletin 2021/07**

(73) Proprietor: **Toray Industries, Inc.
Tokyo 103-8666 (JP)**

(72) Inventors:
• **SAITO Kenji
  Iyo-gun, Ehime 791-3193 (JP)**
• **TANIGUCHI Masahide
  Otsu-shi, Shiga 520-8558 (JP)**

• **TAKABATAKE Hiroo
  Otsu-shi, Shiga 520-8558 (JP)**

(74) Representative: **Hoefer & Partner Patentanwälte
mbB
Pilgersheimer Straße 20
81543 München (DE)**

(56) References cited:
**WO-A1-2012/144384      WO-A1-2014/129383
WO-A1-2016/084905      WO-A1-2017/175657
JP-A- 2000 300 966      JP-A- 2007 152 265
JP-A- 2008 296 188      JP-A- H09 893
KR-B1- 101 641 083**

**(Cont. next page)**

(52) Cooperative Patent Classification (CPC): (Cont.)
C02F 2209/20; C02F 2209/29; C02F 2209/40;
C02F 2209/44; C02F 2301/043; C02F 2303/20

## Description

TECHNICAL FIELD

The present invention relates to a water treatment method based on a reverse osmosis membrane treatment using raw water such as seawater, as well as river water, groundwater, lake water, treated waste water, etc. that contain salt.

BACKGROUND ART

In recent years, due to worse depletion of water resources, use of water resources that have not been used yet is put under consideration. Particularly, attention is paid to so-called "seawater desalination" that is a technique for producing drinking water or the like from seawater that is the most familiar but cannot be used as it is, and further to reuse techniques for recycling treated water obtained by purifying sewage/waste water. The seawater desalination has been put into practical use mainly around an evaporation method in the Middle East where water resources are extremely poor and thermal resources based on petroleum are very rich. Recently, improvement of reliability and reduction in cost has been advanced with technical progress of a reverse osmosis membrane method, and thus seawater desalination plants using the reverse osmosis membrane method have been put into practical use in the Middle East. The reverse osmosis membrane method has been applied to reuse of sewage/waste water in inland or coastal urban parts or industrial areas where there is no water source or where an outflow rate is limited by effluent regulations. Particularly in Singapore, sewage generated domestically is treated and then reclaimed to a drinking water quality by a reverse osmosis membrane to solve water shortage.

WO 2017/175657 1 relates to a water treatment method including: feeding either raw water or pretreated water thereof, as feed water, into a semipermeable membrane module by applying a pressure with a booster pump; and separating the feed water into a concentrate and a permeate, in which a scale inhibitor is dosed to the feed water within 0-60 seconds before or after a reductant is dosed to the feed water.

KR 101 641 083 B1 relates to a high purity industrial water supply system using ultrafiltration (UF) and reverse osmosis (RO) membranes by reusing released wastewater and effluent.

WO 2012/144384 A1 relates to a method and a device for purifying water that contains a radioactive halogen, in which the water containing a radioactive halogen is regulated so as to have an oxidation/reduction potential of 800 mV or less and subjected to solid-liquid separation, and the obtained pretreated water is then regulated so as to have an oxidation/reduction potential of 500 mV or less and treated with a semipermeable-membrane unit to separate the pretreated water into concentrated wastewater and filtrate water.

JP 2008-296188 A teaches to provide a membrane separation apparatus and a membrane separation method capable of preventing supply of supplied water containing an oxidizing agent to a semi-permeable membrane without supplying an excess amount of a reducing agent. Accordingly, at the time of carrying out membrane separation by supplying a pretreated supplied liquid to a semi-permeable membrane module equipped with a reverse osmosis membrane and/or a nanofiltration membrane, the membrane separation method involves supplying an oxidizing agent to the supplied liquid during pretreatment or upstream of the pretreatment and supplying a reducing agent downstream of the pretreatment and upstream of the semi-permeable membrane module and the oxidizing agent concentration or the redox potential of the supplied liquid is measured downstream of the pretreatment and upstream of the semi-permeable membrane module to determine the necessity of the reducing agent supply and the oxidizing agent concentration or the redox potential of the supplied liquid is measured downstream of the reducing agent supply and upstream of the semi-permeable membrane module to determine the supply amount of the reducing agent.

WO 2014/129383 A1 teaches a water treatment system, which is provided with: a main reverse osmosis membrane device for separating water that is to be treated into concentrated brine with high solute concentrations and fresh water; and pre-treatment devices for removing harmful substances, which reduce the membrane performance of the reverse osmosis membranes of the main reverse osmosis membrane device, from the water that is to be treated before supplying same to the main reverse osmosis membrane device. The pre-treatment devices are also provided with a sub-reverse osmosis membrane device.

The reverse osmosis membrane method applied to seawater desalination or sewage/waste water reuse is a water generating method in which water containing a solute such as salt is made to permeate a reverse osmosis membrane with pressure not lower than osmotic pressure to thereby obtain desalinized water. The technique can provide drinking water from, for example, seawater or brackish water. The technique has been also used for producing industrial ultrapure water, treating waste water, recovering valuables, and so on.

Pretreatment corresponding to the quality of raw water to be taken is required for safe operation of a water treatment apparatus using a reverse osmosis membrane. In the pretreatment, an oxidant is added to the raw water (water-to-be-treated) in order to prevent fouling. However, insufficient dosage of the oxidant causes fouling (membrane surface fouling) on a reverse osmosis membrane while insufficient neutralization by reduction causes residual of the oxidant to degrade the reverse osmosis membrane. In either case, safe operation tends to be hardly performed. Particularly when the reverse osmosis membrane is exposed to a chemical substance degrading the reverse osmosis membrane, such as an oxidant, so that the oxidative degradation occurs in the reverse osmosis membrane, the pure water permeability of the reverse osmosis membrane increases and the solute rejection performance thereof deteriorates to degrade the water quality. In addition, it is likely to lead to a fatal state in which the reverse osmosis membrane cannot be restored even if the reverse osmosis membrane itself is cleaned.

On the other hand, when a biofilm is formed in a part or all of a section between an intake pipe and a reverse osmosis membrane module during the operation, occurrence of bio-fouling in the reverse osmosis membrane is accelerated to make it difficult to perform the operation safely. Therefore, an inexpensive oxidant such as hypochlorous acid is generally added continuously or intermittently to the water-to-be-treated, to thereby prevent the occurrence of the biofilm (see Non-Patent Literature 1). Here, the biofilm is a structure which is formed like a film out of bacteria etc. adhering to the surface of the intake pipe or the surface of the reverse osmosis membrane.

However, as described previously, the oxidant tends to give damage to a functional layer expressing the fundamental performance of the reverse osmosis membrane. Particularly, it is known that the oxidative degradation tends to occur in polyamide which is a main component of the reverse osmosis membrane (see Non-Patent Literature 2). Therefore, the prevention of the biofilm from being generated by the oxidant is generally ceased before reaching the reverse osmosis membrane, and the oxidant is neutralized by a reductant to protect the reverse osmosis membrane. Incidentally, influence of bio-fouling on the reverse osmosis membrane is often inhibited in such a manner that a bactericide whose kind and concentration are selected not to give bad influence to the performance of the reverse osmosis membrane is added to prevent occurrence of a bio-film during operation, or the reverse osmosis membrane is cleansed with a cleaning agent to remove a bio-film generated during operation.

However, even if raw water is sufficiently neutralized with a reductant such as sodium hydrogen sulfite before the raw water is poured to the reverse osmosis membrane, transition metal such as copper may be contained in water (pretreated water) supplied to the reverse osmosis membrane so that sulfite ions may be made into sulfite radicals, and further oxidative persulfate radicals or sulfate radicals may be generated. There has been a report that the oxidative degradation may occur in the reverse osmosis membrane due to oxidative substances generated thus newly by the catalyst effect of the transition metal (see Non-Patent Literature 3).

The reductant may be excessively added to the raw water as a method for preventing the oxidative degradation of the reverse osmosis membrane due to the oxidative substance generated by the catalyst effect. However, there has been a report that excessive addition of a reductant tends to produce bio-fouling due to growth of bacteria feeding on the reductant (see Non-Patent Literature 4). As a result, the bactericide or the cleaning agent has to be increased for safe operation of the water treatment apparatus. Thus, the safe operation may be difficult or the operating cost may increase. Further, some kind of raw water may contain, in advance, oxidative substances that will degrade the reverse osmosis membrane independently of the addition of the oxidant or the catalyst effect of the transition metal in the pretreatment. Examples of the oxidative substances include oxidants such as hypochlorous acid added in a pretreatment step or the like, oxidative substances such as radicals (sulfite radicals, persulfate radicals, or sulfate radicals) generated newly in any step.

In a method proposed as a method for reducing and neutralizing oxidative substances in raw water without generating any new oxidative substance, oxidation-reduction potential of water concentrated by a reverse osmosis membrane is monitored, and a scale inhibitor having a reduction function is intermittently or always added as a reductant (see Patent Literature 1).

CITATION LIST

PATENT LITERATURE

Patent Literature 1: WO 2016/084905

NON-PATENT LITERATURE

Non-Patent Literature 1: M. Furuichi et al., Over-Eight-year Operation and Maintenance of 40,000 m3/day Seawater RO Plant in Japan, Proc. of IDA World Congress, SP05-209 (2005)

Non-Patent Literature 2: Tadahiro Uemura et al., Chlorine Resistance of Reverse Osmosis Membranes and Changes in Membrane Structure and Performance Caused by Chlorination Degradation, the Society of Seawater Science, Japan, Vol. 57, No. 3 (2003)

Non-Patent Literature 3: Yosef Ayyash et al., Performance of reverse osmosis membrane in Jeddah Phase I Plant, Desalination, 96, 215-224 (1994)

Non-Patent Literature 4: M. Nagai et al., SWRO Desalination for High Salinity, Proc. of IDA World Congress, DB09-173 (2009)

SUMMARY OF INVENTION

TECHNICAL PROBLEM

However, according to findings of the present inventors, there is possibility that the oxidative degradation may occur in a reverse osmosis membrane even by oxidative substances whose concentration is too low to be detected by measurement of oxidation-reduction potential. Further, if only the concentrate is monitored, abnormality can be detected for the first time when the vicinity of the reverse osmosis membrane has become oxidation state. Therefore, there is a concern that the reverse osmosis membrane may be exposed, for a short time, to the oxidative substances whose amount is too small to be detected by any detection device. Further, the staying time required for reducing and neutralizing the oxidative substances depends on the amount of the oxidative substances contained in the raw water and the dosage of the scale inhibitor added thereto. Therefore, it is difficult to protect the reverse osmosis membrane perfectly only by monitoring and controlling the oxidation-reduction potential.

An object of the present invention is to provide a water treatment method in which a reverse osmosis membrane is used in a reverse osmosis membrane module to obtain permeate with a low salt concentration from raw water (water-to-be-treated) such as seawater, as well as river water, groundwater, lake water, treated waste water, etc. that contain salt, in which an optimum addition timing for adding a scale inhibitor is determined to reduce and neutralize oxidative substances (generically naming of oxidants or oxidative substances generated in a reverse osmosis membrane treatment step), so that fresh water can be obtained stably and inexpensively while efficiently preventing the oxidative degradation of the reverse osmosis membrane.

SOLUTION TO PROBLEM

In order to solve the aforementioned problems, the present invention is defined as shown in the appended claims.

ADVANTAGEOUS EFFECTS OF INVENTION

According to the present invention, it is possible to determine an optimum addition timing for adding a scale inhibitor based on a concentration of oxidative substances in water-to-be-treated and a concentration of the scale inhibitor added thereto, so that the oxidative substances can be reduced and neutralized sufficiently. Further, it is possible to obtain fresh water stably and inexpensively from raw water such as seawater, as well as river water, groundwater, lake water, treated waste water, etc. that contain salt, while efficiently preventing the oxidative degradation of a reverse osmosis membrane module.

BRIEF DESCRIPTION OF DRAWINGS

FIG. 1 is a diagram showing an addition flow of adding a scale inhibitor in a water treatment method according to a first embodiment.

FIG. 2 is a diagram showing the addition flow in the water treatment method according to the first embodiment, including a feed time adjusting unit in a water-to-be-treated feed line from a scale inhibitor addition point to a reverse osmosis membrane module.

FIG. 3 is a diagram showing the addition flow in the water treatment method according to the first embodiment, including: the feed time adjusting unit in the water-to-be-treated feed line from the scale inhibitor addition point to the reverse osmosis membrane module; and feed time adjusting elements provided in series and in parallel in the feed time adjusting unit.

FIG. 4 is a diagram showing the addition flow in the water treatment method according to the first embodiment, including: the feed time adjusting unit in the water-to-be-treated feed line from the scale inhibitor addition point to the reverse osmosis membrane module; the feed time adjusting elements provided in series and in parallel in the feed time adjusting unit; and a bypass line and a feed water path changeover unit as a bypass unit.

FIG. 5 is a diagram showing an addition flow of adding a scale inhibitor in a water treatment method according to a second embodiment, in which a reductant is used together in the addition flow.

FIG. 6 is a diagram showing the addition flow in the water treatment method according to the second embodiment, including a feed time adjusting unit in a water-to-be-treated feed line from a scale inhibitor addition point to a reverse osmosis membrane module.

FIG. 7 is a diagram showing the addition flow in the water treatment method according to the second embodiment, using a bactericide together and including the feed time adjusting unit in the water-to-be-treated feed line from the scale inhibitor addition point to the reverse osmosis membrane module.

FIG. 8 is a partially exploded perspective view of a spiral wound reverse osmosis membrane element to be applied to the present invention.

FIG. 9 is a longitudinally sectional view of a reverse osmosis membrane module to be applied to the present invention.

DESCRIPTION OF EMBODIMENTS

In a water treatment method according to an embodiment of the present invention, a scale inhibitor is added to water-to-be-treated containing an oxidative substance, and the water-to-be-treated is supplied under pressure to a reverse osmosis membrane module by a pressurization-supply unit so that the water-to-be-treated can be separated into a concentrate and a permeate. In the water treatment method, a feed time t [min] of the water-to-be-treated in a water-to-be-treated feed line from a scale inhibitor addition point to a water-to-be-treated feed point in the reverse osmosis membrane module satisfies the following condition (1):

$$\text{Condition (1)} \quad t \geq 5,$$

wherein the feed time t [min] is further not smaller than the smallest value $t_{min}$ [min] of $t_2$ [min] or $t_3$ [min] that can be calculated in the following condition (2) or (3) respectively, where Cox designates a concentration [mg/L] of the oxidative substance in the water-to-be-treated and $C_{AS}$ designates an addition concentration [mg/L] of the scale inhibitor:

$$\text{Condition (2)} \quad t_2 = 40000 \times C_{OX}/C_{AS}$$

in a case where $C_{Ox}$ and $C_{AS}$ are 0.01 or more,

$$\text{Condition (3)} \quad t_3 = 400/C_{AS}$$

in a case where $C_{AS}$ is 0.01 or more, and at least one of a condition that Cox is 0.01 or less and a condition that an oxidation-reduction potential is 350 mV or less is satisfied, and
wherein the feed time t [min] is further not smaller than the smallest value $t_{min}$ [min] among $t_4$ [min] to $t_{11}$ [min] that can be calculated in the following conditions (4) to (11) respectively, where Cox designates a concentration [mg/L] of the oxidative substance in the water-to-be-treated, $C_{AS}$ designates an addition concentration [mg/L] of the scale inhibitor, TN designates a concentration [g/L] of a nitrogen contained in an undiluted solution of the scale inhibitor, TP designates a concentration [g/L] of a phosphorus contained in the undiluted solution of the scale inhibitor, and TOC designates a concentration [g/L] of an organic carbon contained in the undiluted solution of the scale inhibitor:

$$\text{Condition (4)} \quad t_4 = C_{OX} \times TN \times 3650/C_{AS}$$

in a case where the scale inhibitor contains nitrogen and phosphorus, Cox and $C_{AS}$ are 0.01 or more, and a relation of TP/TN>6.6 is satisfied,

$$\text{Condition (5)} \quad t_5 = C_{OX} \times TP \times 550/C_{AS}$$

in a case where the scale inhibitor contains nitrogen and phosphorus, Cox and $C_{AS}$ are 0.01 or more, and a relation of TP/TN≤6.6 is satisfied,

$$\text{Condition (6)} \quad t_6 = 40 \times TN/C_{AS}$$

in a case where the scale inhibitor contains nitrogen and phosphorus, $C_{AS}$ is 0.01 or more, at least one of a condition that Cox is 0.01 or less and a condition that the oxidation-reduction potential is 350 mV or less is satisfied, and a relation of TP/TN>6.6 is satisfied,

$$\text{Condition (7)} \quad t_7 = 5.5 \times TP/C_{AS}$$

in a case where the scale inhibitor contains nitrogen and phosphorus, $C_{AS}$ is 0.01 or more, at least one of the condition that Cox is 0.01 or less and the condition that the oxidation-reduction potential is 350 mV or less is satisfied, and a relation of TP/TN≤6.6 is satisfied,

$$\text{Condition (8)} \quad t_8 = C_{OX} \times TOC \times 2200/C_{AS}$$

in a case where the scale inhibitor contains carbon and phosphorus, Cox and $C_{AS}$ are 0.01 or more, and a relation of TP/TOC>10.3 is satisfied,

$$\text{Condition (9)} \quad t_9 = C_{OX} \times TP \times 550/C_{AS}$$

in a case where the scale inhibitor contains carbon and phosphorus, Cox and $C_{AS}$ are 0.01 or more, and a relation of TP/TOC≤10.3 is satisfied,

$$\text{Condition (10)} \quad t_{10} = 22 \times TOC/C_{AS}$$

in a case where the scale inhibitor contains carbon and phosphorus, $C_{AS}$ is 0.01 or more, at least one of the condition that Cox is 0.01 or less and the condition that the oxidation-reduction potential is 350 mV or less is satisfied, and a relation of TP/TOC>10.3 is satisfied,

$$\text{Condition (11)} \quad t_{11} = 5.5 \times TP/C_{AS}$$

in a case where the scale inhibitor contains carbon and phosphorus, $C_{AS}$ is 0.01 or more, at least one of the condition that Cox is 0.01 or less and the condition that the oxidation-reduction potential is 350 mV or less is satisfied, and a relation of TP/TOC≤10.3 is satisfied.

In addition, a water treatment apparatus described herein but not falling under the scope of the present invention includes: a water-to-be-treated feed line for delivering a water-to-be-treated containing an oxidative substance; a scale inhibitor addition unit adding a scale inhibitor to the water-to-be-treated at a scale inhibitor addition point on the water-to-be-treated feed line; a pressurization-supply unit pressurizing and supplying the water-to-be-treated to which the scale inhibitor has been added; a reverse osmosis membrane module for separating the water-to-be-treated, which has been supplied under pressure by the pressurization-supply unit, into a concentrate and a permeate; at least one of an oxidative substance concentration meter for measuring a concentration of the oxidative substance contained in the water-to-be-treated and an oxidation-reduction potential (ORP) meter for measuring an oxidation-reduction potential (ORP) of the water-to-be-treated, on an upstream of the scale inhibitor addition point; and a feed time adjusting unit that adjusts a feed time t in the water-to-be-treated feed line from the scale inhibitor addition point to a water-to-be-treated feed point, on the water-to-be-treated feed line from the scale inhibitor addition point to the water-to-be-treated feed point in the reverse osmosis membrane module to satisfy the following condition (1):

$$\text{Condition (1)} \quad t \geq 5,$$

wherein the feed time adjusting unit is capable of adjusting the feed time t [min] to be further not smaller than the smallest value $t_{min}$ [min] of $t_2$ [min] or $t_3$ [min] that can be calculated in the following condition (2) or (3) respectively, where Cox designates a concentration [mg/L] of the oxidative substance in the water-to-be-treated and $C_{AS}$ designates an addition concentration [mg/L] of the scale inhibitor:

$$\text{Condition (2)} \quad t_2 = 40000 \times C_{OX}/C_{AS}$$

in a case where $C_{Ox}$ and $C_{AS}$ are 0.01 or more,

$$\text{Condition (3)} \quad t_3 = 400/C_{AS}$$

in a case where $C_{AS}$ is 0.01 or more, and at least one of a condition that Cox is 0.01 or less and a condition that an oxidation-reduction potential is 350 mV or less is satisfied, and

wherein the feed time adjusting unit is further capable of adjusting the feed time t [min] to be further not smaller than the smallest value $t_{min}$ [min] among $t_4$ [min] to $t_{11}$ [min] that can be calculated in the following conditions (4) to (11) respectively, where Cox designates a concentration [mg/L] of the oxidative substance in the water-to-be-treated, $C_{AS}$ designates an addition concentration [mg/L] of the scale inhibitor, TN designates a concentration [g/L] of a nitrogen contained in an undiluted solution of the scale inhibitor, TP designates a concentration [g/L] of a phosphorus contained in the undiluted solution of the scale inhibitor, and TOC designates a concentration [g/L] of an organic carbon contained in the undiluted solution of the scale inhibitor:

$$\text{Condition (4)} \quad t_4 = C_{OX} \times TN \times 3650/C_{AS}$$

in a case where the scale inhibitor contains nitrogen and phosphorus, Cox and $C_{AS}$ are 0.01 or more, and a relation of TP/TN>6.6 is satisfied,

$$\text{Condition (5)} \quad t_5 = C_{OX} \times TP \times 550/C_{AS}$$

in a case where the scale inhibitor contains nitrogen and phosphorus, Cox and $C_{AS}$ are 0.01 or more, and a relation of TP/TN≤6.6 is satisfied,

$$\text{Condition (6)} \quad t_6 = 40 \times TN/C_{AS}$$

in a case where the scale inhibitor contains nitrogen and phosphorus, $C_{AS}$ is 0.01 or more, at least one of a condition that Cox is 0.01 or less and a condition that the oxidation-reduction potential is 350 mV or less is satisfied, and a relation of TP/TN>6.6 is satisfied,

$$\text{Condition (7)} \quad t_7 = 5.5 \times TP/C_{AS}$$

in a case where the scale inhibitor contains nitrogen and phosphorus, $C_{AS}$ is 0.01 or more, at least one of the condition that Cox is 0.01 or less and the condition that the oxidation-reduction potential is 350 mV or less is satisfied, and a relation of TP/TN≤6.6 is satisfied,

$$\text{Condition (8)} \quad t_8 = C_{OX} \times TOC \times 2200/C_{AS}$$

in a case where the scale inhibitor contains carbon and phosphorus, Cox and $C_{AS}$ are 0.01 or more, and a relation of TP/TOC>10.3 is satisfied,

$$\text{Condition (9)} \quad t_9 = C_{OX} \times TP \times 550/C_{AS}$$

in a case where the scale inhibitor contains carbon and phosphorus, Cox and $C_{AS}$ are 0.01 or more, and a relation of TP/TOC≤10.3 is satisfied,

$$\text{Condition (10)} \quad t_{10} = 22 \times TOC/C_{AS}$$

in a case where the scale inhibitor contains carbon and phosphorus, $C_{AS}$ is 0.01 or more, at least one of the condition that Cox is 0.01 or less and the condition that the oxidation-reduction potential is 350 mV or less is satisfied, and a relation of TP/TOC>10.3 is satisfied,

$$\text{Condition (11)} \quad t_{11} = 5.5 \times TP/C_{AS}$$

in a case where the scale inhibitor contains carbon and phosphorus, $C_{AS}$ is 0.01 or more, at least one of the condition that Cox is 0.01 or less and the condition that the oxidation-reduction potential is 350 mV or less is satisfied, and a relation of TP/TOC≤10.3 is satisfied.

Preferred embodiments of the present invention will be described below with reference to the drawings. However, the scope of the invention is not limited to those embodiments but is defined in the appended claims.

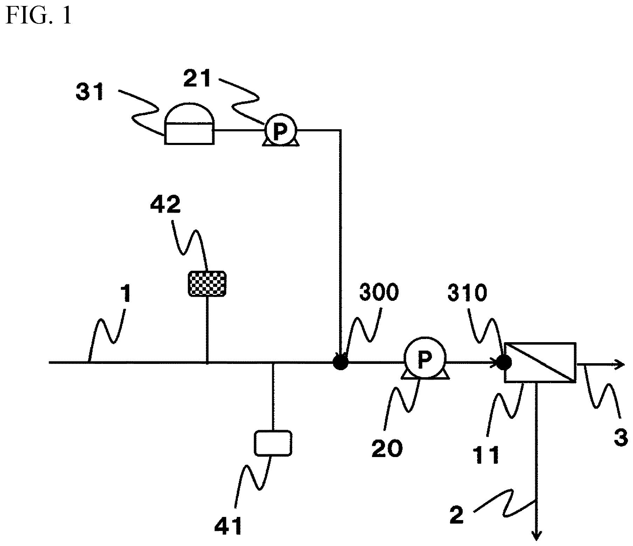

FIG. 1 shows an addition flow of adding a scale inhibitor in a water treatment method according to a first embodiment.

As shown in FIG. 1, in the water treatment method according to the first embodiment, a concentration of oxidative substances contained in water-to-be-treated flowing in a water-to-be-treated feed line 1 is measured by an oxidative substance concentration meter 41, and oxidation-reduction potential (ORP) of the water-to-be-treated is measured by an oxidation-reduction potential (ORP) meter 42. A scale inhibitor is added to the water-to-be-treated by use of a scale inhibitor injection tank 31 and a scale inhibitor injection pump 21 as a scale inhibitor addition unit in order to reduce and neutralize the oxidative substances in the water-to-be-treated. The water-to-be-treated is pressurized by a pressurization-supply unit 20, and then separated into permeate 2 and concentrate 3 by a reverse osmosis membrane module 11.

In the present invention, in order to reduce and neutralize the oxidative substances contained in the water-to-be-treated flowing into the reverse osmosis membrane module 11, the scale inhibitor is added so that a feed time t [min] of the water-to-be-treated in the water-to-be-treated feed line from a scale inhibitor addition point 300 to a water-to-be-treated feed point 310 in the reverse osmosis membrane module 11 satisfies the following condition (1):

$$\text{Condition (1)} \quad t \geq 5$$

When the feed time t in the water-to-be-treated feed line from the scale inhibitor addition point 300 to the water-to-be-treated feed point 310 in the reverse osmosis membrane module 11 is 5 minutes or more, the oxidative substances can be reduced and neutralized sufficiently, so that the oxidative degradation of the reverse osmosis membrane module can be prevented.

In the present embodiment, the scale inhibitor is added so that the feed time t [min] is not smaller than the smallest value $t_{min}$ of $t_2$ [min] or $t_3$ [min] that can be calculated in the further condition (2) or (3) respectively when Cox designates a concentration [mg/L] of oxidative substances in the water-to-be-treated and $C_{AS}$ designates a concentration [mg/L] of the added scale inhibitor:

$$\text{Condition (2)} \quad t_2 = 40000 \times C_{OX}/C_{AS}$$

in a case where Cox and $C_{AS}$ are 0.01 or more,

$$\text{Condition (3)} \quad t_3 = 400/C_{AS}$$

in a case where $C_{AS}$ is 0.01 or more, and at least one of a condition that Cox is 0.01 or less and a condition that oxidation-reduction potential is 350 mV or less is satisfied.

Furthermore, the scale inhibitor is added so that the feed time t [min] is further not smaller than the smallest value $t_{min}$ among $t_4$ [min] to $t_{11}$ [min] that can be calculated in the following conditions (4) to (11) respectively when Cox designates a concentration [mg/L] of oxidative substances in the water-to-be-treated, $C_{AS}$ designates a concentration [mg/L] of the added scale inhibitor, TN designates a concentration [g/L] of nitrogen included in an undiluted solution of the scale inhibitor, TP designates a concentration [g/L] of phosphorus included in the undiluted solution of the scale inhibitor, and TOC designates a concentration [g/L] of organic carbon included in the undiluted solution of the scale inhibitor:

$$\text{Condition (4)} \quad t_4 = C_{OX} \times TN \times 3650 / C_{AS}$$

in a case where the scale inhibitor includes nitrogen and phosphorus, Cox and $C_{AS}$ are 0.01 or more, and TP/TN>6.6 is satisfied,

$$\text{Condition (5)} \quad t_5 = C_{OX} \times TP \times 550 / C_{AS}$$

in a case where the scale inhibitor includes nitrogen and phosphorus, Cox and $C_{AS}$ are 0.01 or more, and TP/TN≤6.6 is satisfied,

$$\text{Condition (6)} \quad t_6 = 40 \times TN / C_{AS}$$

in a case where the scale inhibitor includes nitrogen and phosphorus, $C_{AS}$ is 0.01 or more, at least one of a condition that Cox is 0.01 or less and a condition that oxidation-reduction potential is 350 mV or less is satisfied, and TP/TN>6.6 is satisfied,

$$\text{Condition (7)} \quad t_7 = 5.5 \times TP / C_{AS}$$

in a case where the scale inhibitor includes nitrogen and phosphorus, $C_{AS}$ is 0.01 or more, at least one of the condition that Cox is 0.01 or less and the condition that oxidation-reduction potential is 350 mV or less is satisfied, and TP/TN≤6.6 is satisfied,

$$\text{Condition (8)} \quad t_8 = C_{OX} \times TOC \times 2200 / C_{AS}$$

in a case where the scale inhibitor includes carbon and phosphorus, Cox and $C_{AS}$ are 0.01 or more, and TP/TOC>10.3 is satisfied,

$$\text{Condition (9)} \quad t_9 = C_{OX} \times TP \times 550 / C_{AS}$$

in a case where the scale inhibitor includes carbon and phosphorus, Cox and $C_{AS}$ are 0.01 or more, and TP/TOC≤10.3 is satisfied,

$$\text{Condition (10)} \quad t_{10} = 22 \times TOC / C_{AS}$$

in a case where the scale inhibitor includes carbon and phosphorus, $C_{AS}$ is 0.01 or more, at least one of the condition that Cox is 0.01 or less and the condition that oxidation-reduction potential is 350 mV or less is satisfied, and TP/TOC>10.3 is satisfied,

$$\text{Condition (11)} \quad t_{11} = 5.5 \times TP / C_{AS}$$

in a case where the scale inhibitor includes carbon and phosphorus, $C_{AS}$ is 0.01 or more, at least one of the condition that Cox is 0.01 or less and the condition that oxidation-reduction potential is 350 mV or less is satisfied, and TP/TOC≤10.3 is satisfied.

When the feed time t [min] does not satisfy any conditions (1) to (11), the oxidative substances contained in the water-to-be-treated remain without being reduced and neutralized to oxidize and degrade the reverse osmosis membrane module 11 to thereby promote deterioration in separating performance of the reverse osmosis membrane module 11. Thus, the replacement frequency of the reverse osmosis membrane module increases. That is, it is difficult to obtain fresh water stably and inexpensively in a reverse osmosis membrane treatment step of obtaining permeate with low salt concentration in the reverse osmosis membrane module 11 using raw water such as seawater, as well as river water, groundwater, lake water, treated waste water, etc. that contain salt.

When the scale inhibitor is added so that the feed time t [min] satisfies the condition (1), is not smaller than the smallest value $t_{min}$ of $t_2$ [min] or $t_3$ [min] that can be calculated in the condition (2) or (3), and further is not smaller than the smallest value $t_{min}$ among $t_4$ [min] to $t_{11}$ [min] that can be calculated in the conditions (4) to (11) respectively, the oxidative substances contained in the water-to-be-treated can be reduced and neutralized sufficiently, and fresh water can be obtained stably without lowering the separating performance of the reverse osmosis membrane module 11. On the other hand, a biofilm may be generated on the water-to-be-treated feed line 1 or the reverse osmosis membrane module 11 so that bio-fouling may occur in the reverse osmosis membrane module 11 due to the biofilm. Therefore, the feed time t [min] is preferably set to two times or less of the feed time $t_{min}$ based on the condition (2) or (3) or on any one of the conditions (4) to (11) in accordance with the oxidative substance concentration Cox in the water-to-be-treated.

Incidentally, there is a method in which the addition concentration $C_{AS}$ of the scale inhibitor is increased to sufficiently reduce the oxidative substances. However, the addition amount of the scale inhibitor may be so excessive that the scale inhibitor itself may cause fouling in the reverse osmosis membrane module 11. In addition, the addition cost increases. Therefore, fresh water can be obtained more stably by adjusting the feed time t of the water-to-be-treated in the water-to-be-treated feed line from the scale inhibitor addition point 300 to the water-to-be-treated feed point 310 in the reverse osmosis membrane module 11.

In addition, a method in which sodium hydrogen sulfite is added as a reductant is known as a typical reduction/neutralization method. However, according to findings of the present inventors, when transition metal such as copper is contained in water-to-be-treated flowing into the reverse osmosis membrane module, sulfite ions are made into sulfite radicals, and further oxidative persulfate radicals or sulfate radicals are generated. Thus, new oxidative substances are generated by a catalyst effect of the transition metal so that the reverse osmosis membrane is oxidatively degraded. For the reduction and neutralization by the addition of the scale inhibitor according to the present invention, even if transition metal is contained in the water-to-be-treated flowing into the reverse osmosis membrane module, the oxidative substances contained in the water-to-be-treated can be reduced and neutralized sufficiently to prevent the oxidative degradation of the reverse osmosis membrane, without generating new oxidative substances due to the catalyst effect of the transition metal. It is therefore possible to obtain fresh water stably and inexpensively without lowering the separating performance of the reverse osmosis membrane module 11.

In the present embodiment, the form of the pressurization-supply unit 20 is not limited as long as it has a function of pressurizing the water-to-be-treated to supply it to the reverse osmosis membrane module 11. For example, a booster pump is used.

In addition, the feed time t [min] of the water-to-be-treated from the scale inhibitor addition point 300 to the water-to-be-treated feed point 310 in the reverse osmosis membrane module 11 can be determined in consideration of a line diameter (D) and a line length (L) of the water-to-be-treated feed line from scale inhibitor addition point 300 to the water-to-be-treated feed point 310 in the reverse osmosis membrane module 11, and a water-to-be-treated flow rate (Q).

For example, assume that the water-to-be-treated feed line from scale inhibitor addition point 300 to the water-to-be-treated feed point 310 in the reverse osmosis membrane module 11 is constituted only by a circular pipe. In this case, in consideration of the circular pipe internal diameter (D) [m] and the circular pipe length (L) [m] of the water-to-be-treated feed line, and the water-to-be-treated flow rate (Q) [m³/min], the water-to-be-treated feed line is provided so that the feed time $t=(\pi D^2/4)\times L/Q$ [min] satisfies the condition (1), preferably is not smaller than the smallest value $t_{min}$ of $t_2$ [min] or $t_3$ [min] that can be calculated in the condition (2) or (3), and more preferably is not smaller than the smallest value $t_{min}$ among $t_4$ [min] to $t_{11}$ [min] that can be calculated in the conditions (4) to (11) respectively.

That is, the water-to-be-treated feed line is provided so that the feed time $t=(\pi D^2/4)\times L/Q$ [min] satisfies the condition (1), the condition (2) or (3), and any one of the conditions (4) to (11).

Incidentally, the shape, diameter and length of the water-to-be-treated feed line are not particularly limited. For example, by increasing the line length of the water-to-be-treated feed line, by increasing the line diameter of the water-to-be-treated feed line or by reducing the water-to-be-treated flow rate to prolong the feed time, or by shortening the line length of the water-to-be-treated feed line, by reducing the line diameter of the water-to-be-treated feed line or by increasing the water-to-be-treated flow rate to shorten the feed time, the feed time t in the water-to-be-treated feed line from the scale inhibitor addition point 300 to the water-to-be-treated feed point 310 in the reverse osmosis membrane module 11 can be set so that the feed time t [min] satisfies the condition (1), preferably is not smaller than the smallest

value $t_{min}$ of $t_2$ [min] or $t_3$ [min] that can be calculated in the condition (2) or (3), and more preferably is not smaller than the smallest value $t_{min}$ among $t_4$ [min] to $t_{11}$ [min] that can be calculated in the conditions (4) to (11) respectively. Incidentally, the aforementioned manner is an example of a method in which the feed time t [min] from the scale inhibitor addition point 300 to the water-to-be-treated feed point 310 in the reverse osmosis membrane module 11 is set only by the design of the water-to-be-treated feed line from the scale inhibitor addition point 300 to the water-to-be-treated feed point 310 in the reverse osmosis membrane module 11.

The scale inhibitor that can be used in the present invention must be a scale inhibitor having a reduction function. Preferably a scale inhibitor containing a phosphoric acid based organic compound, and more preferably a phosphorous acid or phosphonic acid based organic compound is suitable. Particularly it is preferable that the scale inhibitor is made of a salt of at least one kind of organic acid or organic acid selected from the group consisting of aminotris(methylenephosphonic acid), diethylenetriamine penta(methylene phosphonic acid), hexamethylenediamine tetra(methylene phosphonic acid), ethylenediamine tetra(methylene phosphonic acid), 1-hydroxyethylidene-1,1-diphosphonic acid, and tetramethylenediamine tetra(methylene phosphonic acid), and the molecular weight thereof is 200 g/mol or more and 10,000 g/mol or less. More preferably the molecular weight thereof may be 200 g/mol or more and 1,000 g/mol or less. When the molecular weight is too small, there is a risk that the scale inhibitor may permeate the reverse osmosis membrane and leak to the permeate side. On the contrary, when the molecular weight is too large, the dosage of the scale inhibitor increases, and a risk that the scale inhibitor itself may unfavorably lead to fouling appears. Incidentally, a scale inhibitor addition unit is not particularly limited, and it may be line injection shown in FIG. 1 or injection into a tank. Preferably a stirrer, a static mixer, etc. may be provided in accordance with necessity.

When nitrogen and phosphorus are contained in an undiluted solution of the scale inhibitor used in the present invention, it is preferable to add the scale inhibitor so that the feed time t [min] of the water-to-be-treated in the water-to-be-treated feed line from the scale inhibitor addition point 300 to the water-to-be-treated feed point 310 in the reverse osmosis membrane module 11 satisfies any one of the conditions (4) to (7) based on a concentration TN [g/L] of nitrogen contained in the undiluted solution of the scale inhibitor, and a concentration TP [g/L] of phosphorus contained in the same. When the feed time t satisfies any one of the conditions (4) to (7), the oxidative substances contained in the water-to-be-treated which is to be injected into the reverse osmosis membrane module 11 can be reduced and neutralized more efficiently.

A concentration TN of the nitrogen contained in the undiluted solution of the scale inhibitor is a total concentration of inorganic nitrogen and organic nitrogen corresponding to ammonium ions, nitrite ions, nitrate ions contained in the undiluted solution of the scale inhibitor. A value determined by oxidative decomposition and chemiluminescence according to JIS is used as the nitrogen concentration TN. Incidentally, a substantially similar value can be obtained by determination with a total nitrogen measuring method, an ultraviolet absorptiometric method, a hydrazinium sulphate reduction method, a copper-cadmium column reduction method, or a thermal decomposition method according to JIS.

In addition, a concentration TP of the phosphorus contained in the undiluted solution of the scale inhibitor is a total concentration of inorganic phosphorus corresponding to orthophosphate, pyrophosphate, tripolyphosphate, oxyphosphate, etc., and organic phosphorus corresponding to phosphoramides, phosphoproteins, phospholipids, etc., which are contained in the undiluted solution of the scale inhibitor. A value determined by ICP emission spectroscopy from a sample dissolved by a decomposition method with nitric acid and sulfuric acid according to JIS is used as the phosphorus concentration TP. Incidentally, a substantially similar value can be obtained by ICP emission spectroscopy from a sample dissolved by a decomposition method with potassium peroxodisulphate or a decomposition method with nitric acid and perchloric acid according to JIS.

In addition, when carbon and phosphorus are contained in the undiluted solution of the scale inhibitor used in the present invention, it is preferable to add the scale inhibitor so that the feed time t [min] of the water-to-be-treated in the water-to-be-treated feed line from the scale inhibitor addition point 300 to the water-to-be-treated feed point 310 in the reverse osmosis membrane module 11 satisfies any one of the conditions (8) to (11) based on a concentration TOC [g/L] of organic carbon contained in the undiluted solution of the scale inhibitor, and a concentration TP [g/L] of phosphorus contained in the same. When the feed time t satisfies any one of the conditions (8) to (11), the oxidative substances contained in the water-to-be-treated for the reverse osmosis membrane module 11 can be reduced and neutralized more efficiently.

The concentration TOC of organic carbon contained in the undiluted solution of the scale inhibitor is an organic carbon concentration obtained by subtracting an inorganic carbon concentration IC [g/L] from a total concentration TC [g/L] of carbon contained in the undiluted solution of the scale inhibitor. A value determined using a combustion oxidation and infrared analysis method according to JIS is used as the organic carbon concentration TOC. Incidentally, a substantially similar value can be obtained by determination using an ultraviolet oxidation and electric conductivity measuring method or a wet oxidation and infrared analysis method according to JIS.

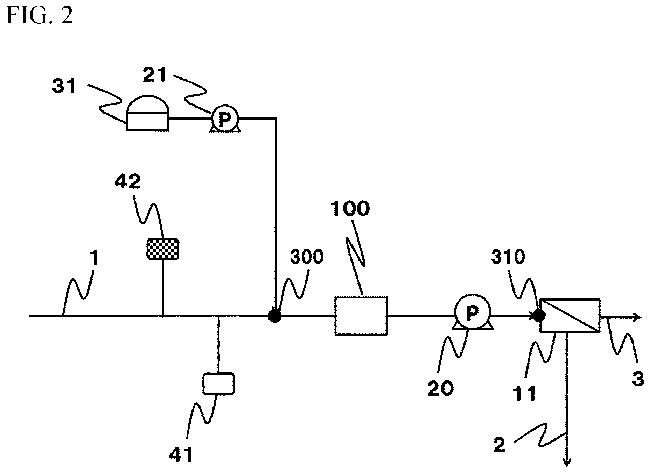

In the first embodiment, as shown in FIG. 2, a feed time adjusting unit 100 can be further provided in the water-to-be-treated feed line from the scale inhibitor addition point 300 to the water-to-be-treated feed point 310 in the reverse osmosis membrane module 11. When the feed time adjusting unit 100 is provided in the water-to-be-treated feed line, the feed time t of the water-to-be-treated in the water-to-be-treated feed line from scale inhibitor addition point 300 to the water-to-be-treated feed point 310 in the reverse osmosis membrane module 11 can be adjusted more easily.

For example, an oxidative substance concentration meter 41 for determining the oxidative substance concentration Cox in the water-to-be-treated flowing in the water-to-be-treated feed line 1, and an oxidation-reduction potential (ORP) meter 42 for measuring the oxidation-reduction potential (ORP) of the water-to-be-treated are provided on the water-to-be-treated feed line 1 for feeding the water-to-be-treated, and the scale inhibitor addition point 300 is provided on the downstream of the oxidative substance concentration meter 41 and the oxidation-reduction potential (ORP) meter 42 while the pressurization-supply unit 20 and the reverse osmosis membrane module 11 are provided on the downstream of the scale inhibitor addition point 300. In this fundamental apparatus configuration, the feed time adjusting unit 100 is provided between the scale inhibitor addition point 300 and the pressurization-supply unit 20.

In the present invention, the feed time required for reducing and neutralizing the oxidative substances with the scale inhibitor depends on the oxidative substance concentration Cox in the water-to-be-treated, and the addition concentration $C_{AS}$ of the scale inhibitor. That is, when the oxidative substance concentration Cox increases not to satisfy any conditions (1) to (11), the addition concentration $C_{AS}$ of the scale inhibitor is increased or the feed time t in the water-to-be-treated feed line from the scale inhibitor addition point 300 to the water-to-be-treated feed point 310 in the reverse osmosis membrane module 11 is increased so that the feed time t [min] is adjusted to satisfy the condition (1), to be not smaller than the smallest value $t_{min}$ of $t_2$ [min] or $t_3$ [min] that can be calculated in the condition (2) or (3), and to be not smaller than the smallest value $t_{min}$ among $t_4$ [min] to $t_{11}$ [min] that can be calculated in the conditions (4) to (11) respectively.

When the feed time t [min] does not satisfy any conditions (1) to (11), the oxidative substances contained in the water-to-be-treated remain without being reduced and neutralized to oxidize and degrade the reverse osmosis membrane of the reverse osmosis membrane module 11 to thereby promote deterioration in separating performance of the reverse osmosis membrane module 11. Thus, the replacement frequency of the reverse osmosis membrane module 11 increases. It is therefore difficult to obtain fresh water stably and inexpensively in a reverse osmosis membrane step of obtaining permeate with low salt concentration in the reverse osmosis membrane module using raw water such as seawater, as well as river water, groundwater, lake water, treated waste water, etc. that contain salt.

On the other hand, when the addition concentration $C_{AS}$ of the scale inhibitor is increased or the feed time t in the water-to-be-treated feed line from the scale inhibitor addition point 300 to the water-to-be-treated feed point 310 in the reverse osmosis membrane module 11 is increased so that the feed time t [min] can satisfy the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively, the oxidative substances contained in the water-to-be-treated can be reduced and neutralized sufficiently so that fresh water can be obtained more stably and inexpensively without lowering the separating performance of the reverse osmosis membrane module 11.

However, in the method in which the addition concentration $C_{AS}$ of the scale inhibitor is increased, the addition amount of the scale inhibitor may be so excessive that the risk that the scale inhibitor itself causes fouling in the reverse osmosis membrane module 11 increases. In addition, the addition cost increases. Further, the control of the addition is complicated. Therefore, more preferably, the feed time t in the water-to-be-treated feed line from the scale inhibitor addition point 300 to the water-to-be-treated feed point 310 in the reverse osmosis membrane module 11 is adjusted to be prolonged or shortened by use of the function of prolonging or shortening the feed time t in the feed time adjusting unit 100. Here, the addition concentration $C_{AS}$ of the scale inhibitor is a weight of the undiluted solution of the scale inhibitor to be added per unit volume of the water-to-be-treated, and preferably a weight of the undiluted solution of the scale inhibitor to be added per 1 L of the water-to-be-treated.

In addition, when the oxidative substance concentration $C_{OX}$ in the water-to-be-treated decreases temporarily due to fluctuation of water quality or the like, the water-to-be-treated in which the addition concentration $C_{AS}$ is excessive is supplied to the reverse osmosis membrane module 11. In addition, the time period for the water-to-be-treated which has been reduced and neutralized by the scale inhibitor to stay in the water-to-be-treated feed line 1 is prolonged so that a biofilm may be generated in the water-to-be-treated feed line 1 or the reverse osmosis membrane module 11. Thus, there is concern that bio-fouling may occur in the reverse osmosis membrane module 11 due to the biofilm so that safe operation cannot be performed easily. Therefore, the feed time t [min] is preferably set to two times or less of the feed time $t_{min}$ in the condition (2) or (3) or in any one of the conditions (4) to (11) in accordance with the oxidative substance concentration $C_{OX}$ in the water-to-be-treated.

In the present embodiment, when it is determined that it is necessary to adjust the feed time t, the feed time adjusting unit may be used for shortening or prolonging the feed time t in accordance with situation as described above.

For example, when the oxidative substance concentration $C_{OX}$ in the water-to-be-treated decreases temporarily due to fluctuation of water quality or the like, the feed time required for reducing and neutralizing the oxidative substances with the scale inhibitor tends to be shortened. Therefore, according to an example of the adjustment method, the addition concentration $C_{AS}$ of the scale inhibitor is reduced and/or the feed time is shortened by the feed time adjusting unit 100 within a range in which the feed time t [min] satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. Thus, there is a merit that the excessive feed time can be shortened, and the risk that bio-fouling may occur in the reverse osmosis membrane module 11 due to a biofilm generated in the water-to-be-treated feed line and the feed time adjusting unit 100 can be reduced.

On the contrary, when the oxidative substance concentration $C_{OX}$ in the water-to-be-treated increases temporarily due to fluctuation of water quality or the like, the feed time required for reducing and neutralizing the oxidative substances with the scale inhibitor tends to be prolonged. Therefore, the addition concentration $C_{AS}$ of the scale inhibitor is increased and/or the feed time is prolonged by the feed time adjusting unit 100 so that the feed time t [min] satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. Thus, fresh water can be obtained more stably and inexpensively without lowering separating performance of the reverse osmosis membrane module 11 due to the oxidative substances contained in the water-to-be-treated which remain without being reduced and neutralized.

In the present invention, the form of the feed time adjusting unit 100 is not limited as long as it has a function capable of prolonging or shortening the feed time t in the water-to-be-treated feed line from the scale inhibitor addition point 300 to the water-to-be-treated feed point 310 in the reverse osmosis membrane module 11. For example, a plurality of water-to-be-treated feed lines different in feed time are provided so that the flow channel through which the water-to-be-treated passes can be changed by operation on valves to thereby prolong or shorten the feed time. When the water-to-be-treated feed lines are, for example, circular pipes, the water-to-be-treated feed lines different in feed time are, for example, water-to-be-treated feed lines configured to be different in at least one of the line diameter and the line length among the water-to-be-treated feed lines and the flow rate of the water-to-be-treated passing through each water-to-be-treated feed line, and/or to be different in at least one of the number and the internal volume of feed time adjusting elements 110 in the feed time adjusting unit provided in each water-to-be-treated feed line.

Each of the feed time adjusting elements 110 of the feed time adjusting unit has a function of prolonging or shortening the feed time t in the water-to-be-treated feed line from the scale inhibitor addition point 300 to the water-to-be-treated feed point 310 in the reverse osmosis membrane module 11. The feed time adjusting element 110 is, for example, a pretreatment device (such as a sand filtration device, an activated carbon device, a settling basin, etc.), a membrane separation device (such as a microfiltration membrane, an ultrafiltration membrane, a membrane separation activated sludge device, a screen filter, a cartridge filter, etc.), a stirring device (such as a static mixer, etc.), a tank (such as a vessel, an intermediate tank, etc.), etc. Preferably the feed time adjusting element 110 satisfies a condition that a value of total internal volume [m$^3$]/water-to-be-treated flow rate (Q) in the feed time adjusting element 110 is 5 minutes or more, and more preferably 30 minutes or more.

The feed time adjusting unit 100 may have a function capable of prolonging or shortening the feed time by adjusting the volume or water level of the water-to-be-treated reserved in each of the feed time adjusting element 110 of the feed time adjusting unit. For example, the volume or water level of the water-to-be-treated reserved in each intermediate tank provided in the water-to-be-treated feed line is adjusted to prolong or shorten the feed time. Further, it is preferable that a unit for promoting mixing, such as a stirrer or an inclined plate/baffle plate, is provided in the intermediate tank or the like provided as the feed time adjusting element 110 of the feed time adjusting unit.

Preferably the feed time adjusting unit has feed time adjusting elements, and adjusts any one of the number of the feed time adjusting elements, the internal volume of each feed time adjusting element, and the volume or water level of the water-to-be-treated reserved in a tank provided as the feed time adjusting element, for adjusting the feed time t.

In order to prolong the feed time t in the water-to-be-treated feed line from the scale inhibitor addition point 300 to the water-to-be-treated feed point 310 in the reverse osmosis membrane module 11, adjusting operation is performed by the feed time adjusting unit 100 so as to increase any one of the number of the feed time adjusting elements 110 of the feed time adjusting unit through which the water-to-be-treated passes, the internal volume of each of the feed time adjusting elements 110, and the volume or water level of the water-to-be-treated reserved in the tank provided as the feed time adjusting element 110 of the feed time adjusting unit during the operation of the water treatment apparatus. In addition, in order to shorten the feed time t, adjusting operation is performed by the feed time adjusting unit 100 so as to decrease any one of the number of the feed time adjusting elements 110 of the feed time adjusting unit through which the water-to-be-treated passes, the internal volume of each of the feed time adjusting elements 110, and the volume or water level of the water-to-be-treated reserved in a tank provided as the feed time adjusting element 110 of the feed time adjusting unit during the operation of the water treatment apparatus.

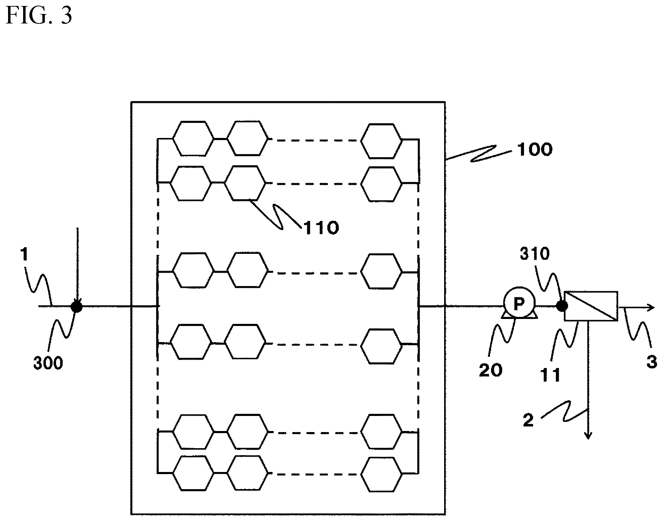

Further, it is preferable that the feed time adjusting unit 100 has the feed time adjusting elements 110 so that two or more of the feed time adjusting elements 110 of the feed time adjusting unit are connected by at least one of series connection and parallel connection as shown in FIG. 3. According to this configuration, there is a merit that the feed time required for reducing and neutralize the oxidative substances with the scale inhibitor can be secured and adjusted easily. Incidentally, in a typical water treatment method, even if a membrane separation device or a stirring device may be provided alone in the water-to-be-treated feed line from the scale inhibitor addition point 300 to the water-to-be-treated feed point 310 in the reverse osmosis membrane module 11, the feed time t in the water-to-be-treated feed line from the scale inhibitor addition point 300 to the water-to-be-treated feed point 310 in the reverse osmosis membrane module 11 cannot be easily set to be 5 minutes or more. However, when the feed time adjusting unit 100 including two or more membrane separation devices, stirring devices, tanks, etc. in series and/or in parallel as the feed time adjusting elements 110 is installed, the feed time t in the water-to-be-treated feed line from the scale inhibitor addition point 300 to the water-to-be-treated feed point 310 in the reverse osmosis membrane module 11 can be set to be 5 minutes or more, and preferably 30 minutes or more. Thus, the oxidative substances contained in the water-to-be-treated can be reduced and neutralized sufficiently to obtain fresh water more stably without lowering the separation performance of the reverse osmosis membrane module 11.

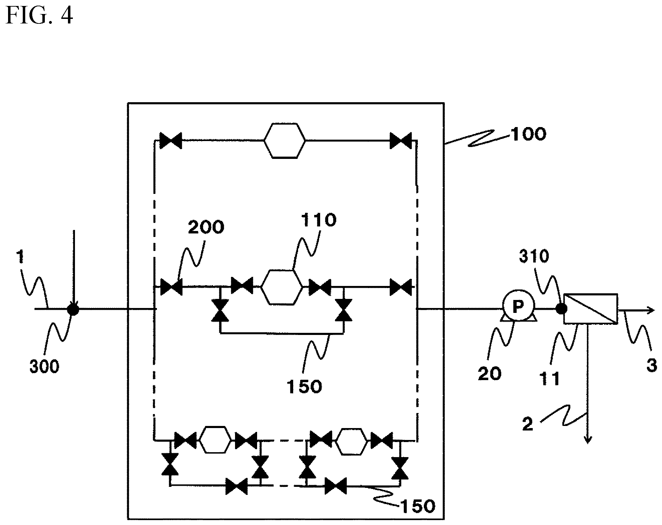

Further, in the feed time adjusting unit 100, a bypass unit 150 for feeding the water-to-be-treated to the reverse osmosis membrane module 11 while bypassing any one or all of the feed time adjusting elements 110 may be placed as shown in FIG. 4. The water-to-be-treated can be bypassed by the bypass unit 150 in order to perform maintenance on any one or all of the feed time adjusting elements 110, and maintenance on the feed time adjusting unit 100 can be performed in a state where the reverse osmosis membrane treatment is continuously performed. Thus, there is a merit that efficiency in production of fresh water can be improved.

In addition, preferably the flow channel of the water-to-be-treated in the water-to-be-treated feed line from the scale inhibitor addition point 300 to the water-to-be-treated feed point 310 in the reverse osmosis membrane module 11 is changed over continuously or intermittently by use of at least one of the feed time adjusting elements 110 and the bypass unit 150 provided for bypassing the feed time adjusting elements 110 so as to adjust the feed time t of the water-to-be-treated.

The water volume bypassed to the bypass unit 150 may be either a part or all of the water-to-be-treated to the reverse osmosis membrane module 11. When the addition concentration $C_{AS}$ of the scale inhibitor is increased or when the oxidative substance concentration $C_{OX}$ in the water-to-be-treated decreases temporarily, it is preferable to bypass a part or all of the water-to-be-treated to the bypass unit 150 so that the feed time t can be shortened. For example, in a case where the oxidative substance concentration $C_{OX}$ in the water-to-be-treated decreases temporarily due to fluctuation of water quality or the like, or in a case where the addition concentration $C_{AS}$ of the scale inhibitor is increased to enhance the scale inhibition effect and/or the reduction effect, the feed time t in the water-to-be-treated feed line from the scale inhibitor addition point 300 to the water-to-be-treated feed point 310 in the reverse osmosis membrane module 11 does not have to be provided to be long to reduce and neutralize the oxidative substances with the scale inhibitor. In such a case, adjustment is performed to allow a part or all of the water-to-be-treated to pass through the bypass unit 150 without passing through the feed time adjusting elements 110 in the feed time adjusting unit 100. In this manner, the excessive feed time is shortened. Thus, there is a merit that it is possible to reduce the risk that bio-fouling may occur in the reverse osmosis membrane module 11 due to a biofilm generated in the water-to-be-treated feed line from the scale inhibitor addition point 300 to the water-to-be-treated feed point 310 in the reverse osmosis membrane module 11.

In addition, when two or more of the feed time adjusting elements 110 of the feed time adjusting unit 100 are connected by at least one of series connection and parallel connection, the bypass unit 150 is preferably provided so that one, a plurality or all of the feed time adjusting elements 110 can be bypassed.

Here, the feed time t in the water-to-be-treated feed line from the scale inhibitor addition point 300 to the water-to-be-treated feed point 310 in the reverse osmosis membrane module 11 is determined by feed time t [min]=$V_T$/Q based on a total internal volume $V_T$ [m³] of the water-to-be-treated feed line, the feed time adjusting elements 110 in the feed time adjusting unit 100 and the bypass line constituting the bypass unit 150, through which the water-to-be-treated passes, and the water-to-be-treated flow rate Q [m³/min].

The total internal volume of the feed time adjusting elements 110 of the feed time adjusting unit is regarded as a total water volume [m³] required for filling each feed time adjusting element 110 with water, and more preferably a total volume [m³] of the water-to-be-treated reserved in each feed time adjusting element 110 during the reserve osmosis membrane treatment performed by the water treatment apparatus. The internal volume of the bypass line is, when the bypass line is a circular pipe, determined by $\pi D_b^2/4$ [m³] based on a circular pipe internal diameter ($D_b$) [m] and a circular pipe length ($L_b$) [m] in the same manner as the aforementioned water-to-be-treated feed line. The circular pipe internal diameter ($D_b$) and the circular pipe length ($L_b$) of the bypass line are not particularly limited, but it is preferable to set them to make the feed time in the case of not passing through the feed time adjusting elements 110 shorter than the feed time in the case of passing through the feed time adjusting elements 110. In this manner, the feed time can be adjusted easily, and the excessive feed time can be shortened. Thus, there is a merit that it is possible to reduce the risk that bio-fouling may occur in the reverse osmosis membrane module 11 due to a biofilm generated in the water-to-be-treated feed line from the scale inhibitor addition point 300 to the water-to-be-treated feed point 310 in the reverse osmosis membrane module 11.

In addition, one or more water-to-be-treated channel/flow rate adjusting units 200 are preferably provided in the bypass line. The form of each water-to-be-treated channel/flow rate adjusting unit 200 is not limited as long as it has a function for changing over the liquid sending path of the feed time adjusting elements 110 and/or the bypass line through which a part or all of the water-to-be-treated passes in the feed time adjusting unit 100, and/or a function for adjusting the water volume of the bypassed water-to-be-treated. For example, valves etc. capable of switching or turning the water-to-be-treated channel or increasing/decreasing the flow rate of the water-to-be-treated are preferably provided as the water-to-be-treated channel/flow rate adjusting units 200. More preferably the water-to-be-treated channel/flow rate adjusting units 200 are placed in the water-to-be-treated feed line on the entrance side and/or exit side of each feed time adjusting element 110 of the feed time adjusting unit.

The water-to-be-treated flow channel and/or the water-to-be-treated flow rate is adjusted to adjust the feed time by use of the water-to-be-treated channel/flow rate adjusting units 200 in accordance with the oxidative substance concentration Cox in the water-to-be-treated and the addition concentration $C_{AS}$ of the scale inhibitor, so that the feed time t [min] in the water-to-be-treated feed line from the scale inhibitor addition point 300 to the water-to-be-treated feed point 310 in the reverse osmosis membrane module 11 satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively.

Assume that a part of the water-to-be-treated flow rate (Q) [m³/min] to the reverse osmosis membrane module is supplied to the bypass unit 150 bypassing the feed time adjusting elements 110 of the feed time adjusting unit 100 while the other water-to-be-treated is supplied to the feed time adjusting elements 110. In this case, in consideration of the water-to-be-treated flow rate ($Q_b$) [m³/min] to the bypass unit 150, the water-to-be-treated flow channel and/or the water-to-be-treated flow rate is adjusted to adjust the feed time by use of the water-to-be-treated channel/flow rate adjusting units 200 in accordance with the oxidative substance concentration $C_{Ox}$ in the water-to-be-treated and the addition concentration $C_{AS}$ of the scale inhibitor, so that, of the feed time [min] of the water-to-be-treated not bypassed = (the total internal volume [m³] of the feed time adjusting elements of the feed time adjusting unit through which the water-to-be-treated passes)/(Q-$Q_b$) and the feed time [min] of the water-to-be-treated bypassed = (the total internal volume [m³] of the feed time adjusting elements of the feed time adjusting unit through which the water-to-be-treated passes + the total internal volume [m³] of the bypass line)/$Q_b$, the shorter feed time t [min] satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively.

For example, when the oxidative substance concentration $C_{OX}$ in the water-to-be-treated is high or the addition concentration $C_{AS}$ of the scale inhibitor is low, the feed time required for reducing and neutralizing the oxidative substances with the scale inhibitor is prolonged. Therefore, the water-to-be-treated flow rate is reduced and/or the number of the feed time adjusting elements 110 is increased, and/or the internal volume of each feed time adjusting element 110 is increased, so that the feed time can be prolonged. Thus, there is a merit that fresh water can be obtained stably and inexpensively without lowering the separating performance of the reverse osmosis membrane module 11 due to the oxidative substances contained in the water-to-be-treated which remain without being reduced and neutralized.

On the contrary, when the oxidative substance concentration $C_{OX}$ in the water-to-be-treated is low or the addition concentration $C_{AS}$ of the scale inhibitor is high, the feed time required for reducing and neutralizing the oxidative substances with the scale inhibitor is shortened. Therefore, the water-to-be-treated flow rate is increased, and/or the number of the feed time adjusting elements 110 is decreased, and/or the internal volume of the feed time adjusting element 110 is reduced, within a range in which the feed time t [min] satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. In this manner, the excessive feed time can be shortened. Thus, there is a merit that it is possible to reduce the risk that bio-fouling may occur in the reverse osmosis membrane module 11 due to a biofilm generated in the water-to-be-treated feed line from the scale inhibitor addition point 300 to the water-to-be-treated feed point 310 in the reverse osmosis membrane module 11.

On the other hand, when the feed time t [min] in the water-to-be-treated feed line from the scale inhibitor addition point 300 to the water-to-be-treated feed point 310 in the reverse osmosis membrane module 11 does not satisfy any conditions (1) to (11), the oxidative substances contained in the water-to-be-treated are not reduced and neutralized but remain to oxidize and degrade the reverse osmosis membrane module 11 to thereby promote deterioration in separating performance of the reverse osmosis membrane module 11. Thus, the replacement frequency of the reverse osmosis membrane module 11 increases. That is, it is difficult to obtain fresh water stably and inexpensively in a reverse osmosis membrane step of obtaining permeate with low salt concentration in the reverse osmosis membrane module using raw water such as seawater, as well as river water, groundwater, lake water, treated waste water, etc. that contain salt.

For adjustment of the feed time using the water-to-be-treated channel/flow rate adjusting units 200, for example, the feed time adjusting elements 110 of the feed time adjusting unit and/or the bypass unit 150 through which the water-to-be-treated passes are changed over so that the feed time t [min] in the water-to-be-treated feed line from the scale inhibitor addition point 300 to the water-to-be-treated feed point 310 in the reverse osmosis membrane module 11

16

satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. Specifically, operation is performed on the water-to-be-treated channel/flow rate adjusting units 200 provided in the water-to-be-treated feed line on the entrance side and/or the exit side of each feed time adjusting element 110 of the feed time adjusting unit 100, and/or provided in the bypass line to change over a liquid sending path so that the feed time adjusting elements 110 of the feed time adjusting unit 100 and/or the bypass line through which a part or all of the water-to-be-treated passes can communicate with the water-to-be-treated feed line, and/or to adjust the water volume of the water-to-be-treated to be bypassed.

For example, when the water-to-be-treated channel/flow rate adjusting units 200 are valves, the valves provided as the water-to-be-treated channel/flow rate adjusting units 200 in the water-to-be-treated feed line on the entrance side and/or the exit side of each feed time adjusting element 110 of the feed time adjusting unit 100 and/or in the bypass line through which the water-to-be-treated passes are opened to open the feed time adjusting elements 110 of the feed time adjusting unit 100 and/or the bypass unit 150 through which the water-to-be-treated passes. On the other hand, the other valves provided as the water-to-be-treated channel/flow rate adjusting units 200 are closed to prevent the water-to-be-treated from flowing and branching into the feed time adjusting elements 110 and/or the bypass unit 150 where the water-to-be-treated is not to pass.

In the present embodiment, for example, assume that the oxidative substance concentration Cox in the water-to-be-treated increases, or the addition concentration $C_{AS}$ of the scale inhibitor decreases, so that the feed time required for reducing and neutralizing the oxidative substances with the scale inhibitor is prolonged. In this case, when a plurality of feed time adjusting elements 110 are provided in parallel in advance, the feed time can be prolonged by the operation of the water-to-be-treated channel/flow rate adjusting units 200 without placing any new feed time adjusting elements 110, so that the feed time t [min] in the water-to-be-treated feed line from the scale inhibitor addition point 300 to the water-to-be-treated feed point 310 in the reverse osmosis membrane module 11 satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. Thus, there is a merit that oxidative substances contained in the water-to-be-treated can be reduced and neutralized sufficiently to obtain fresh water more stably without lowering the separation function of the reverse osmosis membrane module 11.

On the contrary, assume that the oxidative substance concentration $C_{OX}$ in the water-to-be-treated decreases, or the addition concentration $C_{AS}$ of the scale inhibitor increases, so that the feed time required for reducing and neutralizing the oxidative substances with the scale inhibitor is shortened. In this case, when a plurality of feed time adjusting elements 110 are provided in parallel in advance, the feed time can be shortened by the operation of the water-to-be-treated channel/flow rate adjusting units 200 without placing any new feed time adjusting elements 110, within a range in which the feed time t [min] in the water-to-be-treated feed line from the scale inhibitor addition point 300 to the water-to-be-treated feed point 310 in the reverse osmosis membrane module 11 satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. In this manner, the excessive feed time can be reduced. Thus, there is a merit that it is possible to reduce the risk that bio-fouling may occur in the reverse osmosis membrane module 11 due to a biofilm generated in the feed time adjusting unit 100.

In addition, it is preferable that controlling and switching operation is performed on each water-to-be-treated channel/flow rate adjusting unit 200 in accordance with increase/decrease in a value obtained by continuously or intermittently measuring the oxidative substance concentration or the oxidation-reduction potential (ORP) in the water-to-be-treated by use of the oxidative substance concentration meter 41 or the oxidation-reduction potential (ORP) meter 42. More preferably the oxidative substance concentration or the oxidation-reduction potential (ORP) in the water-to-be-treated is continuously or intermittently measured by use of the oxidative substance concentration meter 41 or the oxidation-reduction potential (ORP) meter 42 placed before the scale inhibitor addition point 300.

A method for controlling the water-to-be-treated channel/flow rate adjusting units 200 based on the oxidative substance concentration measured by the oxidative substance concentration meter 41 and the oxidation-reduction potential (ORP) measured by the oxidation-reduction potential (ORP) meter 42 is not particularly limited. Preferably the oxidative substance concentration is measured as residual chlorine equivalent, more preferably the oxidative substance concentration is measured as residual chlorine equivalent after it is confirmed that the measured value of the oxidation-reduction potential (ORP) exceeds 350 mV, and then the water-to-be-treated channel/flow rate adjusting units 200 are operated to adjust the feed time t so that the feed time t [min] in the water-to-be-treated feed line from the scale inhibitor addition point 300 to the water-to-be-treated feed point 310 in the reverse osmosis membrane module 11 satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. By measuring the oxidation-reduction potential (ORP) and measuring the oxidative substance concentration only when the oxidation-reduction potential (ORP) exceeds 350 mV, the number of measuring times of the oxidative substance concentration can be minimized so that the measuring cost can be reduced and the control can be simplified.

For example, assume that the measured value of the oxidative substance concentration is 0.01 mg/L or less, and/or the measured value of the oxidation-reduction potential (ORP) is 350 mV or less, or that the oxidative substance concentration measured after it is confirmed that the oxidation-reduction potential (ORP) exceeds 350 mV is 0.01 mg/L or less. In this case, the water-to-be-treated channel/flow rate adjusting units 200 are operated to change over a liquid sending path to make the water-to-be-treated feed line communicate with the feed time adjusting elements 110 of the feed time adjusting unit 100 and/or the bypass line where a part or all of the water-to-be-treated is to pass and/or to adjust the water volume of the bypassed water-to-be-treated so that the feed time t [min] in the water-to-be-treated feed line from the scale inhibitor addition point 300 to the water-to-be-treated feed point 310 in the reverse osmosis membrane module 11 satisfies the condition (1), preferably either of the conditions (6), (7), (10), and (11), which provides the smallest one. Thus, control is made to prolong or shorten the feed time t.

In addition, assume that the measured value of the oxidative substance concentration exceeds 0.01 mg/L, or the oxidative substance concentration measured after it is confirmed that the oxidation-reduction potential (ORP) exceeds 350 mV exceeds 0.01 mg/L. In this case, the water-to-be-treated channel/flow rate adjusting units 200 are operated to change over a liquid sending path to make the water-to-be-treated feed line communicate with the feed time adjusting elements 110 of the feed time adjusting unit 100 and/or the bypass line where a part or all of the water-to-be-treated is to pass and/or to adjust the water volume of the bypassed water-to-be-treated so that the feed time t [min] in the water-to-be-treated feed line from the scale inhibitor addition point 300 to the water-to-be-treated feed point 310 in the reverse osmosis membrane module 11 satisfies the condition (2), preferably either of the condition (4), (5), (8), and (9), which provides the smallest one. Thus, control is made to prolong or shorten the feed time t.

Here, measurement, calculation and condition selection in the following (A) to (D) can be carried out by automatic control, semi-automatic control or manual control. They can be controlled independently or interlocking with the measurement of the oxidative substance concentration and/or the oxidation-reduction potential (ORP).

(A) To measure the oxidative substance concentration and the oxidation-reduction potential (ORP)

(B) To calculate the feed time t in the water-to-be-treated feed line from the scale inhibitor addition point 300 to the water-to-be-treated feed point 310 in the reverse osmosis membrane module 11

(C) To select conditions corresponding to the present addition method from the condition (1), the condition (2) or (3), and the conditions (4) to (11), and to calculate the feed time t in each selected condition

(D) To operate the water-to-be-treated channel/flow rate adjusting units 200 to adjust the feed time t in the water-to-be-treated feed line from the scale inhibitor addition point 300 to the water-to-be-treated feed point 310 in the reverse osmosis membrane module 11

For example, in a case where the feed time t is controlled interlocking with the measurement of the oxidative substance concentration and/or the oxidation-reduction potential (ORP), the water-to-be-treated channel/flow rate adjusting units 200 are operated to increase the number of the feed time adjusting elements 110 of the feed time adjusting unit 100 in the flow channel of the water-to-be-treated or to increase the total internal volume of the feed time adjusting elements 110 when a periodically measured result of the oxidative substance concentration $C_{OX}$ in the water-to-be-treated exceeds the last measured value. Thus, the feed time t in the water-to-be-treated feed line from the scale inhibitor addition point 300 to the water-to-be-treated feed point 310 in the reverse osmosis membrane module 11 can be prolonged. As a result, there is a merit that fresh water can be obtained more stably and inexpensively without lowering the separating performance of the reverse osmosis membrane module 11 due to the oxidative substances contained in the water-to-be-treated which remain without being reduced and neutralized.

In addition, when a periodically measured result of the oxidative substance concentration $C_{OX}$ in the water-to-be-treated drops below the last measured value, the water-to-be-treated channel/flow rate adjusting units 200 are operated to decrease the number of the feed time adjusting elements 110 of the feed time adjusting unit 100 in the flow path of the water-to-be-treated or to decrease the total internal volume of the feed time adjusting elements 110, within a range in which that the feed time t [min] in the water-to-be-treated feed line from the scale inhibitor addition point 300 to the water-to-be-treated feed point 310 in the reverse osmosis membrane module 11 satisfies the condition (1), is not smaller than the smallest value $t_{min}$ of $t_2$ [min] or $t_3$ [min] that can be calculated in the condition (2) or (3), and is not smaller than the smallest value $t_{min}$ among $t_4$ [min] to $t_{11}$ [min] that can be calculated in the conditions (4) to (11) respectively. Thus, the feed time t in the water-to-be-treated feed line from the scale inhibitor addition point 300 to the water-to-be-treated feed point 310 in the reverse osmosis membrane module 11 can be shortened. In this manner, the excessive feed time can be reduced. Thus, there is a merit that it is possible to reduce the risk that bio-fouling may occur in the reverse osmosis membrane module 11 due to a biofilm generated in the water-to-be-treated feed line from the scale inhibitor addition point 300 to the water-to-be-treated feed point 310 in the reverse osmosis membrane module 11.

Further, the measurement period with which the oxidative substance concentration and the oxidation-reduction potential (ORP) are measured, and the period with which each water-to-be-treated channel/flow rate adjusting unit 200 is controlled based on the result of the measurement are not particularly limited. Preferably the measurement and the control are performed continuously at a short periodical interval of 1 second or less. In this manner, there is a merit that the feed time t in the water-to-be-treated feed line from the scale inhibitor addition point 300 to the water-to-be-treated feed point 310 in the reverse osmosis membrane module 11 can be adjusted to a suitable length in accordance with fluctuation in the oxidative substance concentration in the water-to-be-treated. However, in the water-to-be-treated in which the fluctuation in the oxidative substance concentration is smaller than 0.01 mg/L, fluctuation in the feed time required for reducing and neutralizing the oxidative substances with the scale inhibitor is also small. Therefore, the measurement period with which the oxidative substance concentration and the oxidation-reduction potential (ORP) are measured and the period with which each water-to-be-treated channel/flow rate adjusting unit 200 is controlled and switched in accordance with the measured value of the oxidative substance concentration are intentionally set to an intermittent long period so that maintenance for the measurement, the control and the switching operation can be more simplified, and the effect of reducing the maintenance cost can be expected.

The measurement by the oxidative substance concentration meter 41 is performed by absorptiometric method based on coloring in DPD (N,N-diethyl-p-phenylenediamine) reagent. Thus, a value measured as residual chlorine equivalent is used as the oxidative substance concentration $C_{OX}$. Incidentally, a substantially similar value can be obtained by measuring the oxidative substance concentration $C_{OX}$ based on colorimetry, iodometry, a current method (polarography), etc. In addition, the oxidation-reduction potential (ORP) is an index of oxidizability or reducibility of a solution, which is determined by equilibrium in electron donation/acceptance between oxidant and reductant coexisting in the solution. Generally the oxidation-reduction potential (ORP) is measured as a potential difference between a metal electrode and a reference electrode based on a Nernst equation. The oxidation-reduction potential (ORP) meter 42 is not particularly limited, but it is preferably an oxidation-reduction potential (ORP) meter in which oxidation-reduction potential (ORP) is measured based on a Nernst equation using a platinum electrode and a reference electrode, or a composite electrode of a platinum electrode and a reference electrode. In addition, preferably, measurement is performed using a saturated calomel electrode, a saturated silver/silver-chloride electrode or the like as the reference electrode, and more preferably using a 3.3 mol/L silver chloride electrode as the reference electrode.

Further, when treatment is being performed in the reverse osmosis membrane module, at least one of a reductant and a bactericide may be continuously or intermittently added to the water-to-be-treated at the scale inhibitor addition point or on the upstream side or the downstream side of the scale inhibitor addition point.

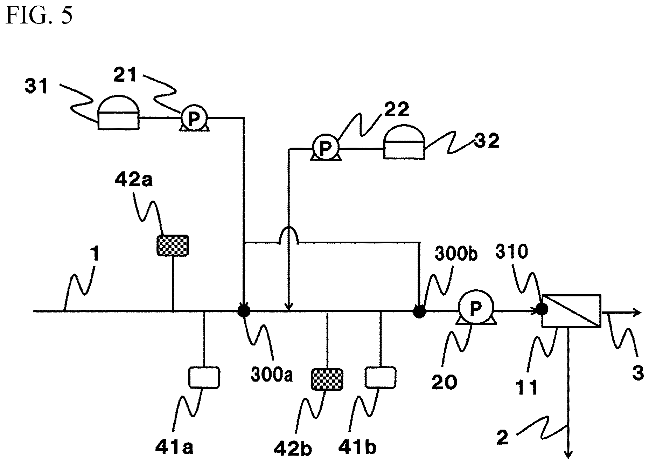

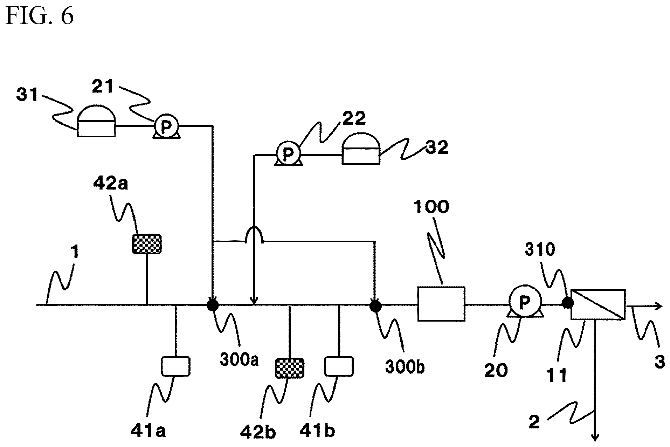

As shown in FIG. 5 or FIG. 6, according to a water treatment method of a second embodiment, a reductant is added to the water-to-be-treated flowing through the water-to-be-treated feed line to the reverse osmosis membrane module 11 by use of a reductant injection tank 32 and a reductant injection pump 22 as a reductant supply unit, and a scale inhibitor is added to the water-to-be-treated by use of the scale inhibitor injection tank 31 and the scale inhibitor injection pump 21 as a scale inhibitor addition unit before the addition of the reductant or after the addition of the reductant, so that the oxidative substances contained in the water-to-be-treated can be reduced and neutralized more efficiently.

In the case where the reductant is added, the concentration of the oxidative substances contained in the water-to-be-treated is preferably measured by an oxidative substance concentration meter 41a (or 41b) placed before a scale inhibitor addition point 300a (or 300b), and the oxidation-reduction potential (ORP) of the water-to-be-treated is preferably measured by use of an oxidation-reduction potential (ORP) meter 42a (or 42b) placed before the scale inhibitor addition point 300a (or 300b). When the oxidative substance concentration and the oxidation-reduction potential (ORP) of the water-to-be-treated are measured at the scale inhibitor addition point 300 in advance, the feed time required for reducing and neutralizing the oxidative substances in the water-to-be-treated with the scale inhibitor added thereto can be determined. When an actual feed time is shorter than the feed time required for reducing and neutralizing the oxidative substances in the water-to-be-treated with the scale inhibitor added thereto, the oxidative substances cannot be reduced and neutralized sufficiently within the feed time, and thus the water-to-be-treated in which the oxidative substances remain reaches the reverse osmosis membrane module 11, causing deterioration in separating performance due to the oxidatively degraded reverse osmosis membrane. On the other hand, when the actual feed time is longer, an oxidant added to prevent a biofilm from being generated in the water-to-be-treated feed line or oxidative substances having an equivalent effect thereto can be reduced and neutralized sufficiently before the water-to-be-treated is supplied to the reverse osmosis membrane module 11. However, the effect of preventing a biofilm from being generated is lost from the water-to-be-treated in the middle of the feed time. Thus, the risk that safe operation is hardly performed due to biofouling occurring in the reverse osmosis membrane module 11 is increased. That is, by setting the feed time required for reducing and neutralizing the oxidative substances in the water-to-be-treated sufficiently, and removing an excessive feed time until the water-to-be-treated reaches the reverse osmosis membrane module 11 after the reduction and neutralization, deterioration in the separating performance of the reverse osmosis membrane module 11 and occurrence of bio-fouling can be prevented efficiently so that fresh water can be obtained stably and inexpensively. Further, preferably, the concentration of the oxidative substances contained in the water-to-be-treated is measured by use of an oxidative substance concentration meter (such as 41b) placed after the scale inhibitor addition point (such as 300a) and the addition of the reductant, or the oxidation-reduction potential (ORP) of the water-to-be-treated is measured by use of an oxidation-reduction potential (ORP) meter (such as 42b), so that it can be confirmed whether the oxidative substances remain or not after the reduction and neutralization reaction of the oxidative substances in the water-to-be-treated. Thus, the water-to-be-treated can be supplied to the reverse osmosis membrane module when the reduction and neutralization reaction of the oxidative substances have been advanced sufficiently.

In addition, the scale inhibitor and the reductant are intermittently or continuously added. However, oxidative substances may be generated suddenly in the water-to-be-treated due to oxidation reaction with transition metal as catalyst in the water-to-be-treated so that the oxidative substances cannot be reduced and neutralized surely by the intermittent addition of the scale inhibitor. In order to reduce and neutralize the oxidative substances in the water-to-be-treated to thereby efficiently prevent the oxidative degradation of the reverse osmosis membrane module 11, it is preferable that the scale inhibitor is continuously added so that the addition can be simplified and the oxidative degradation of the reverse osmosis membrane module can be surely prevented. In addition, in the reverse osmosis membrane treatment step, a large amount of oxidative substances contained in the water-to-be-treated in advance may be reduced and neutralized by a reductant added in accordance with necessity while a small amount of oxidative substances generated newly due to the oxidation reaction with transition metal as catalyst may be reduced and neutralized by the scale inhibitor. Thus, the oxidative substances can be reduced and neutralized more efficiently so that the oxidative degradation of the reverse osmosis membrane module 11 can be efficiently prevented.

The reductant is an additive that has reducing power to deactivate the oxidizability of oxidative substances but does not have a function of inhibiting scale production as the scale inhibitor. Although not particularly limited, the reductant preferably contains, for example, any one of sodium hydrogensulfite, sodium sulfite, sodium pyrosulfite, and sodium thiosulfate.

Incidentally, a reductant adding unit is not particularly limited, but it may be line injection or injection into a tank as shown in FIG. 5 or FIG. 6. The reductant adding unit is preferably provided with a stirrer, a static mixer or the like if necessary. In addition, the position where the scale inhibitor is added when the reductant is used together is not particularly limited. However, it is preferable that the reductant is added 60 seconds or more after the scale inhibitor is added, or the reductant is added 60 seconds or more before the scale inhibitor is added. It is preferable that the scale inhibitor is added on the upstream side 60 seconds or more before the reductant is added or on the downstream side 60 seconds or more after the reductant is added, so that the respective addition effects of the reductant and the scale inhibitor can be expressed sufficiently.

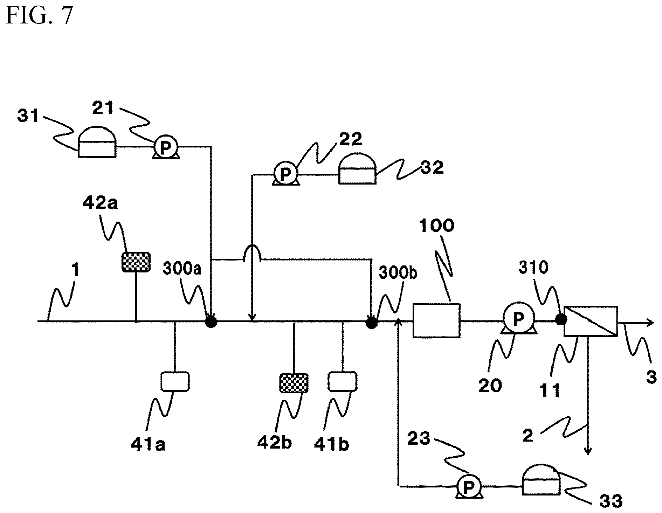

Further, FIG. 7 shows an example of a method for continuously or intermittently adding a bactericide to the water-to-be-treated on the downstream side of the scale inhibitor and the reductant during the reverse osmosis membrane treatment by use of a bactericide injection tank 33 and a bactericide injection pump 23 as a bactericide adding unit in order to sufficiently prevent a biofilm from being generated in the water-to-be-treated feed line from the scale inhibitor addition points 300a and 300b to the water-to-be-treated feed point 310 in the reverse osmosis membrane module 11.

As a method for adding the bactericide, the bactericide may be continuously or intermittently added to the water-to-be-treated during the reverse osmosis membrane treatment and at the same time as the scale inhibitor and/or the reductant, or on the upstream side or the downstream side thereof.

The addition amount and the addition method of the bactericide are not particularly limited. If the addition amount of the bactericide is small, the effect of inhibiting the production of a biofilm cannot be obtained. It is therefore preferable to add the bactericide to the water-to-be-treated so that the residual halogen concentration in the water-to-be-treated or the concentrate reaches 0.01 mg/L or more. However, a large addition amount of the bactericide promotes deterioration of a functional layer in the reverse osmosis membrane so that there is a concern that the separating performance of the reverse osmosis membrane module 11 is lowered.

Incidentally, a bactericide adding unit is not particularly limited, but it may be line injection or injection into a tank in the same manner as the scale inhibitor addition unit and the reductant adding unit. The bactericide adding unit is also preferably provided with a stirrer, a static mixer or the like if necessary.

In the present reverse osmosis membrane treatment step, the bactericide to be added if necessary is not particularly limited, but it is preferably a bactericide giving no bad influence to the reverse osmosis membrane module, and more preferably a bactericide including either a sulfamic acid based bactericide or a bactericide having combined halogen as its main component. More preferably, as the bactericide having combined halogen as its main component, either a combined chlorine based bactericide of chloramine such as monochloramine, dichloramine or trichloramine, or another chloramine such as chloramine T (N-chloro-4-mthylbenzenesulfoneamide, sodium salt), or a combined bromine based bactericide such as DBNPA (2,2-dibromo-3-nitrilopropionamide) or the like is added.

Examples of raw materials of reverse osmosis membranes to which the present invention can be applied include polymer raw materials such as cellulose acetate based polymer, polyamide, polyester, polyimide, or vinyl polymer. In the membrane structure of such a reverse osmosis membrane, a dense layer is provided on at least one side of the membrane, and the membrane is either an asymmetric membrane having micropores each having a pore diameter increasing from the dense layer toward the inside or the other side of the membrane, or a composite membrane having a very thin functional layer formed out of another raw material on the dense layer of the asymmetric membrane. However, among them, the composite membrane using polyamide as a separating functional layer is preferred because it also has high pressure resistance, high water permeability and high solute rejection performance and has excellent potential. Particularly in order to obtain fresh water from a high-concentration aqueous solution such as seawater, it is necessary to apply pressure not lower than osmotic pressure. Substantially an operating pressure of at least 5 MPa is often required. In order to make it possible to maintain high water permeability and high rejection performance against this pressure, a structure in which polyamide is used as a separating functional layer, which is retained by a support made of a porous membrane or a nonwoven fabric is suitable. In addition, a composite reverse osmosis membrane in which a separating functional layer of crosslinked polyamide obtained by polycondensation reaction between multifunctional amine and multifunctional acid halide is provided on a support is suitable as the polyamide reverse osmosis membrane.

The separating functional layer preferably consists of crosslinked polyamide high in chemical stability to acid or alkali, or has the crosslinked polyamide as its main component. The crosslinked polyamide is formed by interface polycondensation between multifunctional amine and multifunctional acid halide, and preferably at least one of the multifunctional amine and the multifunctional acid halide contains a compound which is at least trifunctional.

Here, the multifunctional amine is amine having at least two primary and/or secondary amino groups in one molecule. Examples of the multifunctional amine include aromatic multifunctional amine in which two amino groups are combined to a benzene in a positional relation of an ortho-position, a meta-position or a para-position, such as phenylenediamine, xylylenediamine, 1,3,5-triaminobenzene, 1,2,4-triaminobenzene, or 3,5-diaminobenzoic acid; aliphatic amine such as ethylenediamine or propylenediamine; and alicyclic multifunctional amine such as 1,2-diaminocyclohexane, 1,4-diaminocyclohexane, piperazine, 1,3-bispiperidylpropane, or 4-aminomethylpiperidine. Among them, the multifunctional amine is preferably aromatic multifunctional amine in consideration of selective separation capability or permeability of the membrane, and heat resistance. As such a multifunctional aromatic amine, m-phenylenediamine, p-phenylenediamine or 1,3,5-triaminobenzene is preferably used. Further, the m-phenylenediamine (hereinafter referred to as m-PDA) is more preferably used because of its availability and easiness in handling. Each of those multifunctional amines may be used alone, or some of them may be used in mixture.

The multifunctional acid halide is an acid halide having at least two halogenated carbonyl groups in one molecule. Examples of trifunctional acid halides include trimesoyl chloride, 1,3,5-cyclohexanetricarboxyloyl trichloride, and 1,2,4-cyclobutanetricarboxyloyl trichloride. Examples of bifunctional acid halides include aromatic bifunctional acid halides such as biphenyldicarboxyloyl dichloride, biphenylenecarboxyloyl dichloride, azobenzenedicarboxyloyl dichloride, terephthaloyl chloride, isophthaloyl chloride, and naphthalenedicarboxyloyl chloride; aliphatic bifunctional acid halides such as adipoyl chloride, and sebacoyl chloride; and alicyclic bifunctional acid halides such as cyclopentanedicarboxyloyl dichloride, cyclohexanedicarboxyloyl dichloride, and tetrahydrofurandicarboxyloyl dichloride. The multifunctional acid halide is preferably multifunctional acid chloride in consideration of reactivity to the multifunctional amine. In addition, the multifunctional acid halide is preferably a multifunctional aromatic acid chloride in consideration of selective separation capability of the membrane, and heat resistance. Among those multifunctional acid halides, the trimesoyl chloride is more preferably used in terms of availability and easiness in handling. Each of those multifunctional acid halides may be used alone, or some of them may be used in mixture.

Preferably, aliphatic acyl groups are placed in the separating functional layer so that the structure of the membrane can be made dense to improve the ion rejection performance of boron and the like. A method for placing the aliphatic acyl groups in the separating functional layer is not particularly limited. For example, an aliphatic acid halide solution may be brought into contact with a surface of a separating functional layer formed by interface polycondensation between multifunctional amine and multifunctional acid halide, or aliphatic acid halide may be placed together during the interface polycondensation between the multifunctional amine and the multifunctional aromatic acid halide, so that acyl groups can be placed in the separating functional layer by covalent bonding.

That is, when a polyamide separating functional layer is to be formed on a microporous support membrane, the polyamide separating functional layer may be formed by interface polycondensation among a multifunctional amine aqueous solution, an organic solvent solution of multifunctional acid halide, and an organic solvent solution of another aliphatic acid halide having a carbon number of 1-4 which are brought into contact with one another on a microporous support membrane, or the polyamide separating functional layer may be formed by interface polycondensation between a multifunctional amine aqueous solution, and an organic solvent solution containing multifunctional acid halide and another aliphatic acid halide having a carbon number of 1-4 which are brought into contact with one another on a microporous support membrane. On that occasion, the aliphatic acid halide used in the present invention typically has a carbon number of 1 to 4, and preferably a carbon number of 2 to 4. With increase in carbon number, reactivity of the aliphatic acid halide is lowered due to steric hindrance, or cannot approach a reactive point of the multifunctional acid halide easily. Thus, smooth formation of the membrane is impeded so that the performance of the membrane is lowered.

Examples of such aliphatic acid halides include methanesulfonyl chloride, acetyl chloride, propionyl chloride, butyryl chloride, oxalyl chloride, malonyl dichloride, succinyl dichloride, maleoyl dichloride, fumaroyl chloride, chlorosulfonylacetyl chloride, and N,N-dimethylaminocarbonyl chloride. Each of those aliphatic acid halides may be used alone, or two or more kinds of them may be used together. However, the oxalyl chloride is preferably included as a main component in terms of good balance with which the membrane can be formed into a dense structure without greatly lowering the water permeability

However, the polyamide tends to be oxidatively degraded, and is vulnerable to an oxidant such as hypochlorous acid. Therefore, when the present invention is applied, there is a very large effect in efficiently protecting the reverse osmosis membrane from the oxidant.

The support including the microporous support membrane is a layer that does not have substantially separating performance. The support is provided to give mechanical strength to the separating functional layer of crosslinked polyamide having substantially separating performance. For example, a support in which a microporous support membrane is formed on a base material such as a cloth or a nonwoven fabric may be used.

The raw material of the microporous support membrane is not particularly limited. Examples thereof include homopolymers or copolymers of polysulfone, cellulose acetate, cellulose nitrate, polyvinyl chloride, polyacrylonitrile, polyphenylene sulfide, and polyphenylene sulfide sulfone. Each of those homopolymers or copolymers may be used alone, or some of them may be blended. Among those raw materials, the polysulfone is preferably used because it is high in chemical, mechanical and thermal stability and easy to be molded. In addition, the structure of the microporous support membrane is not particularly limited. The structure thereof may be a structure in which micropores with uniform pore diameters are provided from the front side to the back side of the membrane, or an asymmetric structure in which dense micropores are provided in one side thereof and each of the micropores has a pore diameter gradually increasing from the one side toward the other side. Preferably each of the dense micropores has a size of 100 nm or less.

Here, in order to allow the composite reverse osmosis membrane to exert its performance sufficiently, the air permeability of the base material is preferably 0.1 cm$^3$/cm$^2$/sec or higher, and more preferably 0.4 to 1.5 cm$^3$/cm$^2$/sec. Incidentally, the air permeability is measured based on a Frazier method according to JIS L1096.

In addition, the nonwoven fabric to be used is not particularly limited. By use of a nonwoven fabric formed by knitting a mixture of at least two kinds of polyester fibers whose single yarn fineness is within a range of 0.1 to 0.6 decitex or particularly 0.3 to 2.0 decitex, pores each having a diameter of 10 μm or less can be formed among the fibers composing the base material so that the joint strength between the microporous support membrane and the nonwoven fabric can be enhanced. Further, it is preferable that the pores each having a diameter of 10 μm or less are present at a ratio of 90% or higher. The pore diameter here is measured based on a bubble point method according to JIS K3832.

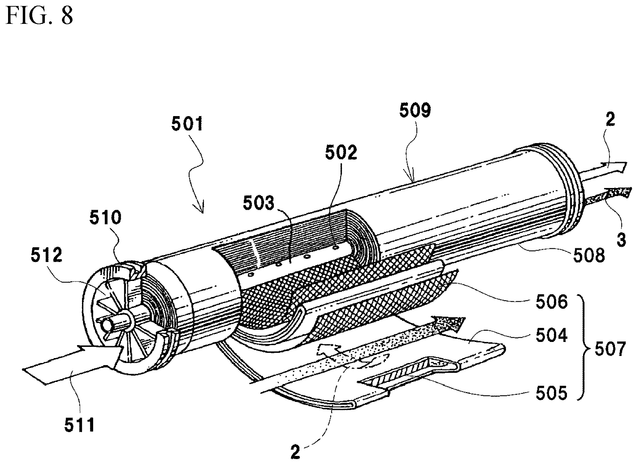

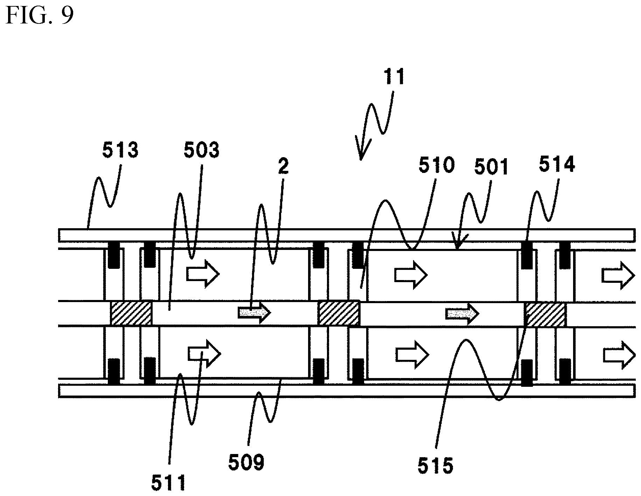

FIG. 8 shows a partially exploded perspective view of a spiral wound reverse osmosis membrane element to be used in the present invention. FIG. 9 shows a longitudinally sectional view of a reverse osmosis membrane module to be used in the present invention. Typically in the spiral wound reverse osmosis membrane element 501, a reverse osmosis membrane unit 507 including a reverse osmosis membrane 504, a permeate spacer 505 and a water-to-be-treated spacer 506 is spirally wound around a water collecting pipe 503 having water collecting apertures 502, and an exterior body 508 is formed outside the reverse osmosis membrane unit 507. Thus, a fluid separation element 509 is constituted. End faces of the fluid separation element 509 are exposed. An anti-telescoping plate 510 is attached to at least one of the end faces in order to prevent the fluid separation element 509 from being deformed like a telescope.

Water-to-be-treated 511 is supplied to the reverse osmosis membrane unit 507 through a water-to-be-treated channel 512 of the anti-telescoping plate 510, and subjected to a membrane separation treatment so as to be separated into permeate 2 and concentrate 3, and collected as the permeate 2 in the water collecting pipe 503.

In addition, FIG. 9 shows a longitudinally sectional view of a reverse osmosis membrane module to be used in the present invention. The spiral wound reverse osmosis membrane element 501 constituted as shown in FIG. 8 is received alone in a pressure vessel 513, or a plurality of spiral wound reverse osmosis membrane elements 501 constituted likewise are received in series in the pressure vessel 513. Thus, the reverse osmosis membrane module 11 is constituted. In each spiral wound reverse osmosis membrane element 501, a water-to-be-treated seal member 514 is provided on the outer circumference of the anti-telescoping plate 510 so as to supply the water-to-be-treated 511 to the reverse osmosis membrane unit 507. In addition, water collecting pipes 503 of spiral wound reverse osmosis membrane elements 501 adjacent to each other are designed to be connected to each other through a connection tube 515 equipped in both the water collecting pipes 503.

Each element to be used in a reverse osmosis membrane module to which the present invention can be applied may be formed as an element having a suitable form in accordance with the membrane form of a reverse osmosis membrane. The reverse osmosis membrane according to the present invention may be a hollow fiber membrane, a tubular membrane or a flat membrane. The element is not particularly limited as long as it has substantial liquid chambers on the opposite sides of the reverse osmosis membrane so that liquid can be pressurized and transmitted from one surface of the reverse osmosis membrane to the other surface. When each reverse osmosis membrane is a flat membrane, the element is typically of a plate and frame type having a structure in which a plurality of composite reverse osmosis membranes supported by a frame are laminated, or of a type called a spiral wound as described above. Such elements are received in a rectangular or cylindrical housing (such as a pressure vessel) in use. In addition, when each reverse osmosis membrane is a hollow fiber membrane or a tubular membrane, a plurality of reverse osmosis membranes are disposed in a housing and their end portions are potted to form liquid chambers to thereby form an element. Then, as a liquid separation apparatus, such an element is used alone, or such elements are used in series or parallel connection.

Of those element shapes, the spiral wound is the most typical. In the spiral wound, a separation membrane like a flat membrane is wound around a water collecting pipe together with a water-to-be-treated spacer or a permeate spacer, and, if necessary, a film for enhancing pressure resistance. Examples of materials that can be used for the water-to-be-treated spacer include a net-like material, a mesh-like material, a grooved sheet, and a wavy sheet. Examples of materials that can be used for the permeate spacer include a net-like material, a mesh-like material, a grooved sheet, and a wavy sheet. Each of those materials may be a net or a sheet independent of any separation membrane, or may be a net or a sheet integrated therewith by bonding, welding or the like.

The material of the water collecting pipe is not limited, and it may be resin or metal. Generally, in consideration of cost and durability, plastic such as Noryl resin or ABS resin is usually used. As a means for sealing end portions of separation membranes, a bonding method is preferably used. As a bonding agent, any known bonding agent can be used, such as a urethane based bonding agent, an epoxy based bonding agent, and a hot melt bonding agent.

EXAMPLES

For a water treatment method for reducing and neutralizing oxidative substances with a scale inhibitor based on the embodiments for carrying out the present invention, results of effect confirmation tests carried out will be described with reference to Table 1 and Table 2.

<Preparation of Simulated Seawater and Method of Effect Confirmation Test>

27,500 mg/L of sodium chloride, 10,700 mg/L of magnesium chloride hexahydrate, 4,100 mg/L of magnesium sulfate heptahydrate, 927 mg/L of calcium chloride dihydrate, and 1,000 mg/L of potassium chloride were added to pure water to prepare simulated seawater. Sodium hypochlorite was added as oxidative substances to the simulated seawater, and then the simulated seawater was reserved in a water-to-be-treated tank. When the test water reserved in the water-to-be-treated tank was being sent through a water-to-be-treated feed line by a feed pump, a commercially available scale inhibitor was added thereto. The test water was once passed via a feed time adjusting unit constituted by an intermediate tank (internal volume=1.5 m$^3$) as a feed time adjusting element so as to adjust the feed time. After that, the test water was further passed through a safety filter by a feed pump. The test water was then supplied to a reverse osmosis membrane module by a pressurization-supply unit. Thus, fresh water was produced. A single polyamide reverse osmosis membrane element "TM810C" (trade name) made by TORAY Industries Inc. was used as the reverse osmosis membrane module, which was operated at a water-to-be-treated flow rate of 1.0 m$^3$/h and a permeate flow rate of 0.12 m$^3$/h (a recovery ratio of 12%).

<Example 1>

Sodium hypochlorite was added to the simulated seawater so that oxidative substance concentration ($C_{OX}$) reached 0.05 mg/L. Oxidation-reduction potential (ORP) was measured by an oxidation-reduction potential (ORP) meter, and a value obtained as a result thereof was 600 mV or more. Here, as a scale inhibitor, a phosphonic acid based scale inhibitor including aminotris (methylenephosphonic acid) (hereinafter abbreviated to ATMP) as its main component was added at an addition concentration ($C_{AS}$) of 50 mg/L.

A concentration TN of nitrogen contained in an undiluted solution of the scale inhibitor was determined by oxidative decomposition and chemiluminescence according to JIS K0102, and a value obtained as a result thereof was TN=10 g/L. A concentration TP of phosphorus contained in the undiluted solution of the scale inhibitor was determined by ICP emission spectroscopy from a sample dissolved by decomposition with nitric acid and sulfuric acid according to JIS K0102, and a value obtained as a result thereof was TP=100 g/L. A concentration TOC of organic carbon contained in the undiluted solution of the scale inhibitor was determined by a combustion oxidation and infrared analysis method according to JIS K0102, and a value obtained as a result thereof was TOC=40 g/L. Thus, TP/TN=10 and TP/TOC=2.5.

The feed time in the water-to-be-treated feed line from a scale inhibitor addition point to a water-to-be-treated feed point in the reverse osmosis membrane module was adjusted to be 5 minutes or longer, and shorter than 40 minutes by allowing the water-to-be-treated to once pass through the intermediate tank of the feed time adjusting unit. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 9%, and the salt concentration in the permeate deteriorated to 1.2 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA (Electron Spectroscopy for Chemical Analysis: X-ray photoelectron analysis). As a result, no C-Cl bond was detected, and therefore it was estimated that the membrane surface had not been oxidatively degraded by contact with halogen.

<Example 2>

The feed time in the water-to-be-treated feed line from the scale inhibitor addition point to the water-to-be-treated feed point in the reverse osmosis membrane module was adjusted to be 40 minutes or more by allowing the water-to-be-treated to once pass through the intermediate tank of the feed time adjusting unit. The other conditions were the same as in Example 1. Thus, operation was continued for one month. The operating condition satisfied the conditions (2), (4) and (9) in addition to the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 10%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 3>

Sodium hypochlorite was added to the simulated seawater so that oxidative substance concentration ($C_{OX}$) reached 0.05 mg/L. Oxidation-reduction potential (ORP) was measured by an oxidation-reduction potential (ORP) meter, and a value obtained as a result thereof was 600 mV or more. Here, as a scale inhibitor, a phosphonic acid based scale inhibitor including ATMP as its main component and including other nitrogen compounds was added at an addition concentration ($C_{AS}$) of 50 mg/L.

A concentration TN of nitrogen contained in an undiluted solution of the scale inhibitor was determined by oxidative decomposition and chemiluminescence according to JIS K0102, and a value obtained as a result thereof was TN=20 g/L. A concentration TP of phosphorus contained in the undiluted solution of the scale inhibitor was determined by ICP emission spectroscopy from a sample dissolved by decomposition with nitric acid and sulfuric acid according to JIS K0102, and a value obtained as a result thereof was TP=100 g/L. Thus, TP/TN=5.

The feed time in the water-to-be-treated feed line from the scale inhibitor addition point to the water-to-be-treated feed point in the reverse osmosis membrane module was adjusted to be 5 minutes or longer, and shorter than 55 minutes by allowing the water-to-be-treated to once pass through the intermediate tank of the feed time adjusting unit. The other conditions were the same as in Example 1. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 9%, and the salt concentration in the permeate deteriorated to 1.2 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 4>

The feed time in the water-to-be-treated feed line from the scale inhibitor addition point to the water-to-be-treated feed point in the reverse osmosis membrane module was adjusted to be 55 minutes or longer by allowing the water-to-be-treated to once pass through the intermediate tank of the feed time adjusting unit. The other conditions were the same as in Example 3. Thus, operation was continued for one month. The operating condition satisfied the conditions (2) and (5) in addition to the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 10%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 5>

Sodium hypochlorite was added to the simulated seawater so that oxidative substance concentration ($C_{OX}$) reached 0.05 mg/L. Oxidation-reduction potential (ORP) was measured by an oxidation-reduction potential (ORP) meter, and a value obtained as a result thereof was 600 mV or more. Here, as a scale inhibitor, a phosphonic acid based scale inhibitor including ATMP as its main component and including other phosphorus compounds was added at an addition concentration ($C_{AS}$) of 50 mg/L.

A concentration TP of phosphorus contained in an undiluted solution of the scale inhibitor was determined by ICP emission spectroscopy from a sample dissolved by decomposition with nitric acid and sulfuric acid according to JIS K0102, and a value obtained as a result thereof was TP=450 g/L. A concentration TOC of organic carbon contained in the undiluted solution of the scale inhibitor was determined by a combustion oxidation and infrared analysis method according to JIS K0102, and a value obtained as a result thereof was TOC=40 g/L. Thus, TP/TOC=11.25.

The feed time in the water-to-be-treated feed line from the scale inhibitor addition point to the water-to-be-treated feed point in the reverse osmosis membrane module was adjusted to be 5 minutes or longer, and shorter than 88 minutes by allowing the water-to-be-treated to once pass through the intermediate tank of the feed time adjusting unit. The other conditions were the same as in Example 1. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 9%, and the salt concentration in the permeate deteriorated to 1.2 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 6>

The feed time in the water-to-be-treated feed line from the scale inhibitor addition point to the water-to-be-treated feed point in the reverse osmosis membrane module was adjusted to be 88 minutes or longer by allowing the water-to-be-treated to once pass through the intermediate tank of the feed time adjusting unit. The other conditions were the same as in Example 5. Thus, operation was continued for one month. The operating condition satisfied the conditions (2) and (8) in addition to the condition (1) required for the feed time in the water-to-be-treated feed line from the scale inhibitor addition point to the water-to-be-treated feed point in the reverse osmosis membrane module.

During the operation, the oxidative substance concentration decreased to detection limit or lower in each of the simulated seawater supplied to the reverse osmosis membrane module and the concentrate from the reverse osmosis membrane module, and the oxidation-reduction potential (ORP) decreased to be 350 mV or less in each of them. After the operation, the fresh water production amount in the used reverse osmosis membrane element was lowered by 10%, differential pressure was increased by 10%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 7>

To simulate a composition of seawater in an inland sea facing an industrial area, copper chloride was added to the simulated seawater so that copper (Cu) as transition metal reached 0.005 mg/L, and sodium hydrogensulfite was added as a reductant by 2 mg/L. Oxidative substance concentration was measured by an oxidative substance concentration meter, and a value obtained as a result thereof was detection limit or lower. Oxidation-reduction potential (ORP) was measured by an oxidation-reduction potential (ORP) meter, and a value obtained as a result thereof was 350 mV or less. Here, as a scale inhibitor, a phosphonic acid based scale inhibitor including ATMP as its main component was added at an addition concentration ($C_{AS}$) of 50 mg/L.

A concentration TN of nitrogen contained in an undiluted solution of the scale inhibitor was determined by oxidative decomposition and chemiluminescence according to JIS K0102, and a value obtained as a result thereof was TN=10 g/L. A concentration TP of phosphorus contained in the undiluted solution of the scale inhibitor was determined by ICP emission spectroscopy from a sample dissolved by decomposition with nitric acid and sulfuric acid according to JIS K0102, and a value obtained as a result thereof was TP=100 g/L. A concentration TOC of organic carbon contained in the undiluted solution of the scale inhibitor was determined by a combustion oxidation and infrared analysis method according to JIS K0102, and a value obtained as a result thereof was TOC=40 g/L. Thus, TP/TN=10 and TP/TOC=2.5.

The feed time in the water-to-be-treated feed line from a scale inhibitor addition point to a water-to-be-treated feed point in the reverse osmosis membrane module was adjusted to be 5 minutes or longer, and shorter than 11 minutes by allowing the water-to-be-treated to once pass through the intermediate tank of the feed time adjusting unit. The other conditions are the same as in Example 1. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 13%, and the salt concentration in the permeate deteriorated to 1.15 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 8>

The feed time in the water-to-be-treated feed line from the scale inhibitor addition point to the water-to-be-treated feed point in the reverse osmosis membrane module was adjusted to be 11 minutes or longer by allowing the water-to-be-treated to once pass through the intermediate tank of the feed time adjusting unit. The other conditions were the same as in Example 7. Thus, operation was continued for one month. The operating condition satisfied the conditions (3), (6) and (11) in addition to the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 15%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 9>

To simulate a composition of seawater in an inland sea facing an industrial area, copper chloride was added to the simulated seawater so that copper (Cu) as transition metal reached 0.005 mg/L, and sodium hydrogensulfite was added as a reductant by 2 mg/L. Oxidative substance concentration was measured by an oxidative substance concentration meter, and a value obtained as a result thereof was detection limit or lower. Oxidation-reduction potential (ORP) was measured by an oxidation-reduction potential (ORP) meter, and a value obtained as a result thereof was 350 mV or less. Here, as a scale inhibitor, a phosphonic acid based scale inhibitor including ATMP as its main component and including other nitrogen compounds was added at an addition concentration ($C_{AS}$) of 50 mg/L.

A concentration TN of nitrogen contained in an undiluted solution of the scale inhibitor was determined by oxidative decomposition and chemiluminescence according to JIS K0102, and a value obtained as a result thereof was TN=20 g/L. A concentration TP of phosphorus contained in the undiluted solution of the scale inhibitor was determined by ICP emission spectroscopy from a sample dissolved by decomposition with nitric acid and sulfuric acid according to JIS K0102, and a value obtained as a result thereof was TP=100 g/L. Thus, TP/TN=5.

The feed time in the water-to-be-treated feed line from a scale inhibitor addition point to a water-to-be-treated feed point in the reverse osmosis membrane module was adjusted to be 5 minutes or longer, and shorter than 11 minutes by allowing the water-to-be-treated to once pass through the intermediate tank of the feed time adjusting unit. The other conditions are the same as in Example 1. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 13%, and the salt concentration in the permeate deteriorated to 1.2 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 10>

The feed time in the water-to-be-treated feed line from the scale inhibitor addition point to the water-to-be-treated feed point in the reverse osmosis membrane module was adjusted to be 11 minutes or longer by allowing the water-to-be-treated to once pass through the intermediate tank of the feed time adjusting unit. The other conditions were the same as in Example 9. Thus, operation was continued for one month. The operating condition satisfied the conditions (3) and (7) in addition to the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 15%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 11>

To simulate a composition of seawater in an inland sea facing an industrial area, copper chloride was added to the simulated seawater so that copper (Cu) as transition metal reached 0.005 mg/L, and sodium hydrogensulfite was added as a reductant by 2 mg/L. Oxidative substance concentration was measured by an oxidative substance concentration meter, and a value obtained as a result thereof was detection limit or lower. Oxidation-reduction potential (ORP) was measured by an oxidation-reduction potential (ORP) meter, and a value obtained as a result thereof was 350 mV or less. Here, as a scale inhibitor, a phosphonic acid based scale inhibitor including ATMP as its main component and including other phosphorus compounds was added at an addition concentration ($C_{AS}$) of 50 mg/L.

A concentration TP of phosphorus contained in an undiluted solution of the scale inhibitor was determined by ICP emission spectroscopy from a sample dissolved by decomposition with nitric acid and sulfuric acid according to JIS K0102, and a value obtained as a result thereof was TP=450 g/L. A concentration TOC of organic carbon contained in the undiluted solution of the scale inhibitor was determined by a combustion oxidation and infrared analysis method according to JIS K0102, and a value obtained as a result thereof was TOC=40 g/L. Thus, TP/TOC=11.25.

The feed time in the water-to-be-treated feed line from a scale inhibitor addition point to a water-to-be-treated feed point in the reverse osmosis membrane module was adjusted to be 5 minutes or longer, and shorter than 17.6 minutes by allowing the water-to-be-treated to once pass through the intermediate tank of the feed time adjusting unit. The other conditions are the same as in Example 1. Thus, operation was continued for one month. The operating condition satisfied only the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 13%, and the salt concentration in the permeate deteriorated to 1.2 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Example 12>

The feed time in the water-to-be-treated feed line from the scale inhibitor addition point to the water-to-be-treated feed point in the reverse osmosis membrane module was adjusted to be 17.6 minutes or longer by allowing the water-to-be-treated to once pass through the intermediate tank of the feed time adjusting unit. The other conditions were the same as in Example 11. Thus, operation was continued for one month. The operating condition satisfied the conditions (3) and (10) in addition to the condition (1) required for the feed time in the water-to-be-treated feed line from the scale inhibitor addition point to the water-to-be-treated feed point in the reverse osmosis membrane module.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them. After the operation, the fresh water production amount in the used reverse osmosis membrane element was lowered by 10%, differential pressure was increased by 15%, and the salt concentration in the permeate deteriorated to 1.1 times in comparison with initial one.

The reverse osmosis membrane element was autopsied and cleansed with acid and alkali. As a result, both the fresh water production amount and the permeate quality were recovered to be equivalent to their initial performance. Further, a membrane surface was analyzed by use of ESCA. As a result, no C-Cl bond was detected. It was estimated that the membrane surface had not been oxidatively degraded by contact with halogen.

<Comparative Example 1>

No scale inhibitor was added, and the other conditions were the same as in Example 1. Thus, operation was continued for one month.

During the operation, the oxidative substance concentration was kept 0.05 mg/L in the simulated seawater supplied to the reverse osmosis membrane module, and the oxidation-reduction potential (ORP) was kept 600 mV or more. It was suspected that the surface of the reverse osmosis membrane had been oxidized.

After the operation, the fresh water production amount in the used reverse osmosis membrane element was lowered by 5%, differential pressure was increased by 5%, and the salt concentration in the permeate deteriorated to 2 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 2>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 1. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was 0.02 mg/L in the simulated seawater supplied to the reverse osmosis membrane module, and the oxidation-reduction potential (ORP) was 500 mV in each water. It was suspected that the surface of the reverse osmosis membrane had been oxidized.

After the operation, the fresh water production amount in the used reverse osmosis membrane element was lowered by 5%, differential pressure was increased by 8%, and the salt concentration in the permeate deteriorated to 1.7 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 3>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 3. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was 0.03 mg/L in the simulated seawater supplied to the reverse osmosis membrane module, and the oxidation-reduction potential (ORP) was 550 mV. It was suspected that the surface of the reverse osmosis membrane had been oxidized.

After the operation, the fresh water production amount in the used reverse osmosis membrane element was lowered by 5%, differential pressure was increased by 8%, and the salt concentration in the permeate deteriorated to 1.8 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 4>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 5. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was 0.04 mg/L in the simulated seawater supplied to the reverse osmosis membrane module, and the oxidation-reduction potential (ORP) was 600 mV. It was suspected that the surface of the reverse osmosis membrane had been oxidized.

After the operation, the fresh water production amount in the used reverse osmosis membrane element was lowered by 5%, differential pressure was increased by 7%, and the salt concentration in the permeate deteriorated to 1.9 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 5>

No scale inhibitor was added, and the other conditions were the same as in Example 7. Thus, operation was continued for one month.

During the operation, the oxidative substance concentration was 0.01 mg/L in the simulated seawater supplied to the reverse osmosis membrane module, and the oxidation-reduction potential (ORP) was 350 mV.

After the operation, the fresh water production amount in the used reverse osmosis membrane element was lowered by 8%, differential pressure was increased by 10%, and the salt concentration in the permeate deteriorated to 1.5 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 6>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 7. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them.

After the operation, the fresh water production amount in the used reverse osmosis membrane element was lowered by 8%, differential pressure was increased by 13%, and the salt concentration in the permeate deteriorated to 1.4 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 7>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 9. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them.

After the operation, the fresh water production amount in the used reverse osmosis membrane element was lowered by 8%, differential pressure was increased by 12%, and the salt concentration in the permeate deteriorated to 1.5 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

<Comparative Example 8>

The feed time in the water-to-be-treated feed line from the scale inhibitor addition point to the water-to-be-treated feed point in the reverse osmosis membrane module was set to be shorter than 5 minutes without allowing the water-to-be-treated to pass through the intermediate tank of the feed time adjusting unit. The other conditions were the same as in Example 11. Thus, operation was continued for one month. The operating condition did not satisfy any conditions (1) to (11) required for the feed time in the water-to-be-treated feed line from the scale inhibitor addition point to the water-to-be-treated feed point in the reverse osmosis membrane module, or did not conform to the preconditions thereof.

During the operation, the oxidative substance concentration was kept at detection limit or lower in each of the simulated seawater supplied to the reverse osmosis membrane module and the concentrate from the reverse osmosis membrane module, and the oxidation-reduction potential (ORP) was kept 350 mV or less in each of them.

After the operation, the fresh water production amount in the used reverse osmosis membrane element was lowered by 8%, differential pressure was increased by 12%, and the salt concentration in the permeate deteriorated to 1.5 times in comparison with initial one. The reverse osmosis membrane element was autopsied and cleansed with acid and alkali. After that, a membrane surface was analyzed by use of ESCA. As a result, a C-Cl bond was detected. It was estimated that the membrane surface was oxidatively degraded by contact with halogen so that the quality of the permeate deteriorated.

Table 1

| Ex. | Test solution | | Scale inhibitor | | | | | Parameter | | Feed time [min] |
| | Oxidative substance $C_{OX}$ [mg/L] | ORP [mV] | Component | Addition amount $C_{AS}$ [mg/L] | TP [g/L] | TN [g/L] | TOC [g/L] | TP/ TN | TP/ TOC | |
|---|---|---|---|---|---|---|---|---|---|---|
| 1 | 0.05 | 600 or more | ATMP | 50 | 100 | 10 | 40 | 10 | 2.5 | 5≤ <40 |
| 2 | 0.05 | 600 or more | ATMP | 50 | 100 | 10 | 40 | 10 | 2.5 | 40≤ |
| 3 | 0.05 | 600 or more | ATMP + N compound | 50 | 100 | 20 | - | 5 | - | 5≤ <55 |
| 4 | 0.05 | 600 or more | ATMP + N compound | 50 | 100 | 20 | - | 5 | - | 55≤ |
| 5 | 0.05 | 600 or more | ATMP + P compound | 50 | 450 | - | 40 | - | 11.25 | 5≤ <88 |
| 6 | 0.05 | 600 or more | ATMP + P compound | 50 | 450 | - | 40 | - | 11.25 | 88≤ |
| 7 | Detection limit or lower | 350 or less | ATMP | 50 | 100 | 10 | 40 | 10 | 2.5 | 5≤ <11 |
| 8 | Detection limit or lower | 350 or less | ATMP | 50 | 100 | 10 | 40 | 10 | 2.5 | 11≤ |
| 9 | Detection limit or lower | 350 or less | ATMP + N compound | 50 | 100 | 20 | - | 5 | - | 5≤ <11 |
| 10 | Detection limit or lower | 350 or less | ATMP + N compound | 50 | 100 | 20 | - | 5 | - | 11≤ |
| 11 | Detection limit or lower | 350 or less | ATMP + P compound | 50 | 450 | - | 40 | - | 11.25 | 5≤ <17.6 |

(continued)

| Ex. | Test solution | | Scale inhibitor | | | | | Parameter | | Feed time [min] |
| | Oxidative substance $C_{OX}$ [mg/L] | ORP [mV] | Component | Addition amount $C_{AS}$ [mg/L] | TP [g/L] | TN [g/L] | TOC [g/L] | TP/ TN | TP/ TOC | |
| --- | --- | --- | --- | --- | --- | --- | --- | --- | --- | --- |
| 12 | Detection limit or lower | 350 or less | ATMP + P compound | 50 | 450 | - | 40 | - | 11.25 | 17.6≤ |

Table 1 (continued)

| Ex. | Condition | | | | | | | | | | | Operation result | | | ESCA analysis |
|---|---|---|---|---|---|---|---|---|---|---|---|---|---|---|---|
| | | | | | | | | | | | | Fresh water production amount | Differential pressure | Salt concentration of permeate | result |
| | (1) | (2) | (3) | (4) | (5) | (6) | (7) | (8) | (9) | (10) | (11) | [decrease by %] | [increase by %] | [increase by times] (from initial) | C-Cl bond (degraded by oxidation) |
| 1 | A | B | - | B | - | - | - | - | B | - | - | 10 | 9 | 1.2 | absent |
| 2 | A | A | - | A | - | - | - | - | A | - | - | 10 | 10 | 1.1 | absent |
| 3 | A | B | - | - | B | - | - | - | - | - | - | 10 | 9 | 1.2 | absent |
| 4 | A | A | - | - | A | - | - | - | - | - | - | 10 | 10 | 1.1 | absent |
| 5 | A | B | - | - | - | - | - | B | - | - | - | 10 | 9 | 1.2 | absent |
| 6 | A | A | - | - | - | - | - | A | - | - | - | 10 | 10 | 1.1 | absent |
| 7 | A | - | B | - | - | B | - | - | - | - | B | 10 | 13 | 1.15 | absent |
| 8 | A | - | A | - | - | A | - | - | - | - | A | 10 | 15 | 1.1 | absent |
| 9 | A | - | B | - | - | - | B | - | - | - | - | 10 | 13 | 1.2 | absent |
| 10 | A | - | A | - | - | - | A | - | - | - | - | 10 | 15 | 1.1 | absent |
| 11 | A | - | B | - | - | - | - | - | - | B | - | 10 | 13 | 1.2 | absent |
| 12 | A | - | A | - | - | - | - | - | - | A | - | 10 | 15 | 1.1 | absent |
| *explanation of signs A: condition satisfied B: condition not satisfied -: not conform to precondition | | | | | | | | | | | | | | | |

Table 2

| Comparative Ex. | Test solution | | Scale inhibitor | | | | | | Parameter | | Feed time [min] |
|---|---|---|---|---|---|---|---|---|---|---|---|
| | Oxidative substance $C_{OX}$ [mg/L] | ORP [mV] | Component | Addition amount $C_{AS}$ [mg/L] | TP [g/L] | TN [g/L] | TOC [g/L] | TP/TN | TP/ TOC | | |
| 1 | 0.05 | 600 or more | not added | | | | | - | | - | - |
| 2 | 0.05 | 600 or more | ATMP | 50 | 100 | 10 | 40 | 10 | 2.5 | <5 |
| 3 | 0.05 | 600 or more | ATMP + N compound | 50 | 100 | 20 | - | 5 | - | <5 |
| 4 | 0.05 | 600 or more | ATMP + P compound | 50 | 450 | - | 40 | - | 11.25 | <5 |
| 5 | Detection limit or lower | 350 or less | not added | | | | | - | | - | - |
| 6 | Detection limit or lower | 350 or less | ATMP | 50 | 100 | 10 | 40 | 10 | 2.5 | <5 |
| 7 | Detection limit or lower | 350 or less | ATMP + N compound | 50 | 100 | 20 | - | 5 | - | <5 |
| 8 | Detection limit or lower | 350 or less | ATMP + P compound | 50 | 450 | - | 40 | - | 11.25 | <5 |

Table 2 (continued)

| Comparative Ex. | Condition | | | | | | | | | | | Operation result | | | ESCA analysis result |
| --- | --- | --- | --- | --- | --- | --- | --- | --- | --- | --- | --- | Fresh water production amount | Differential pressure | Salt concentration of permeate | |
| | (1) | (2) | (3) | (4) | (5) | (6) | (7) | (8) | (9) | (10) | (11) | [decrease by %] | [increase by %] | [increase by times] (from initial) | C-Cl bond (degraded by oxidation) |
| 1 | - | - | - | - | - | - | - | - | - | - | - | 5 | 5 | 2 | present |
| 2 | B | B | - | B | - | - | - | - | B | - | - | 5 | 8 | 1.7 | present |
| 3 | B | B | - | - | B | - | - | - | - | - | - | 5 | 8 | 1.8 | present |
| 4 | B | B | - | - | - | - | - | B | - | - | - | 5 | 7 | 1.9 | present |
| 5 | - | - | - | - | - | - | - | - | - | - | - | 8 | 10 | 1.5 | present |
| 6 | B | - | B | - | - | B | - | - | - | - | B | 8 | 13 | 1.4 | present |
| 7 | B | - | B | - | - | - | B | - | - | - | - | 8 | 12 | 1.5 | present |
| 8 | B | - | B | - | - | - | - | - | - | B | - | 8 | 12 | 1.5 | present |

*explanation of signs A: condition satisfied B: condition not satisfied -: not conform to precondition

INDUSTRIAL APPLICABILITY

According to the present invention, it is possible to provide a water treatment method which uses a reverse osmosis membrane for obtaining permeate with a low salt concentration by a reverse osmosis membrane module, using raw water (water-to-be-treated) such as seawater, as well as river water, groundwater, lake water, treated waste water, etc. that contain salt, in which an optimum addition timing for adding a scale inhibitor is determined to reduce and neutralize oxidative substances (generically naming of oxidants or oxidative substances generated in a reverse osmosis membrane treatment step), so that fresh water can be obtained stably and inexpensively while efficiently preventing the oxidative degradation of the reverse osmosis membrane.

Although the present invention has been described in detail and with reference to its specific embodiments, it is obvious for those in the art that various changes or modifications can be made without departing from the scope of the present invention as defined in the claims.

REFERENCE SIGNS LIST

    1: water-to-be-treated feed line
    2: permeate
    3: concentrate
    11: reverse osmosis membrane module
    20: pressurization-supply unit
    21: scale inhibitor injection pump
    22: reductant injection pump
    23: bactericide injection pump
    31: scale inhibitor injection tank
    32: reductant injection tank
    33: bactericide injection tank
    41,41a,41b: oxidative substance concentration meter
    42,42a,42b: oxidation-reduction potential (ORP) meter
    100: feed time adjusting unit
    110: feed time adjusting element
    150: bypass unit
    200: water-to-be-treated channel/flow rate adjusting unit
    300,300a,300b: scale inhibitor addition point
    310: water-to-be-treated feed point
    501: spiral wound reverse osmosis membrane element
    502: water collecting aperture
    503: water collecting pipe
    504: reverse osmosis membrane
    505: permeate spacer
    506: water-to-be-treated spacer
    507: reverse osmosis membrane unit
    508: exterior body
    509: fluid separation element
    510: anti-telescoping plate
    511: water-to-be-treated
    512: water-to-be-treated channel
    513: pressure vessel
    514: water-to-be-treated seal member
    515: connection tube

**Claims**

1. A water treatment method comprising:

    adding a scale inhibitor having a reduction function to a water-to-be-treated containing an oxidative substance;

and

performing a separation treatment in which the water-to-be-treated is supplied under pressure to a reverse osmosis membrane module by a pressurization-supply unit so as to separate the water-to-be-treated into a concentrate and a permeate,

wherein a feed time t [min] of the water-to-be-treated in a water-to-be-treated feed line from a scale inhibitor addition point to a water-to-be-treated feed point in the reverse osmosis membrane module satisfies the following condition (1):

$$\text{Condition (1)} \quad t \geq 5,$$

wherein the feed time t [min] is further not smaller than the smallest value $t_{min}$ [min] of $t_2$ [min] or $t_3$ [min] that can be calculated in the following condition (2) or (3) respectively, where $C_{OX}$ designates a concentration [mg/L] of the oxidative substance in the water-to-be-treated and $C_{AS}$ designates an addition concentration [mg/L] of the scale inhibitor:

$$\text{Condition (2)} \quad t_2 = 40000 \times C_{OX}/C_{AS}$$

in a case where $C_{Ox}$ and $C_{AS}$ are 0.01 or more,

$$\text{Condition (3)} \quad t_3 = 400/C_{AS}$$

in a case where $C_{AS}$ is 0.01 or more, and at least one of a condition that $C_{OX}$ is 0.01 or less and a condition that an oxidation-reduction potential is 350 mV or less is satisfied, and

wherein the feed time t [min] is further not smaller than the smallest value $t_{min}$ [min] among $t_4$ [min] to $t_{11}$ [min] that can be calculated in the following conditions (4) to (11) respectively, where $C_{OX}$ designates a concentration [mg/L] of the oxidative substance in the water-to-be-treated, $C_{AS}$ designates an addition concentration [mg/L] of the scale inhibitor, TN designates a concentration [g/L] of a nitrogen contained in an undiluted solution of the scale inhibitor, TP designates a concentration [g/L] of a phosphorus contained in the undiluted solution of the scale inhibitor, and TOC designates a concentration [g/L] of an organic carbon contained in the undiluted solution of the scale inhibitor:

$$\text{Condition (4)} \quad t_4 = C_{OX} \times TN \times 3650/C_{AS}$$

in a case where the scale inhibitor contains nitrogen and phosphorus, $C_{OX}$ and $C_{AS}$ are 0.01 or more, and a relation of TP/TN>6.6 is satisfied,

$$\text{Condition (5)} \quad t_5 = C_{OX} \times TP \times 550/C_{AS}$$

in a case where the scale inhibitor contains nitrogen and phosphorus, $C_{OX}$ and $C_{AS}$ are 0.01 or more, and a relation of TP/TN≤6.6 is satisfied,

$$\text{Condition (6)} \quad t_6 = 40 \times TN/C_{AS}$$

in a case where the scale inhibitor contains nitrogen and phosphorus, $C_{AS}$ is 0.01 or more, at least one of a condition that $C_{OX}$ is 0.01 or less and a condition that the oxidation-reduction potential is 350 mV or less is satisfied, and a relation of TP/TN>6.6 is satisfied,

$$\text{Condition (7)} \quad t_7 = 5.5 \times TP/C_{AS}$$

in a case where the scale inhibitor contains nitrogen and phosphorus, $C_{AS}$ is 0.01 or more, at least one of the condition that $C_{OX}$ is 0.01 or less and the condition that the oxidation-reduction potential is 350 mV or less is satisfied, and a relation of TP/TN≤6.6 is satisfied,

$$\text{Condition (8)} \quad t_8 = C_{OX} \times TOC \times 2200/C_{AS}$$

in a case where the scale inhibitor contains carbon and phosphorus, $C_{OX}$ and $C_{AS}$ are 0.01 or more, and a relation of TP/TOC>10.3 is satisfied,

$$\text{Condition (9)} \quad t_9 = C_{OX} \times TP \times 550/C_{AS}$$

in a case where the scale inhibitor contains carbon and phosphorus, $C_{OX}$ and $C_{AS}$ are 0.01 or more, and a relation of TP/TOC≤10.3 is satisfied,

$$\text{Condition (10)} \quad t_{10} = 22 \times TOC/C_{AS}$$

in a case where the scale inhibitor contains carbon and phosphorus, $C_{AS}$ is 0.01 or more, at least one of the condition that $C_{OX}$ is 0.01 or less and the condition that the oxidation-reduction potential is 350 mV or less is satisfied, and a relation of TP/TOC>10.3 is satisfied,

$$\text{Condition (11)} \quad t_{11} = 5.5 \times TP/C_{AS}$$

in a case where the scale inhibitor contains carbon and phosphorus, $C_{AS}$ is 0.01 or more, at least one of the condition that $C_{OX}$ is 0.01 or less and the condition that the oxidation-reduction potential is 350 mV or less is satisfied, and a relation of TP/TOC≤10.3 is satisfied.

2. The water treatment method according to claim 1, wherein the feed time t is adjusted in accordance with a situation by a feed time adjusting unit provided in the water-to-be-treated feed line from the scale inhibitor addition point to the water-to-be-treated feed point in the reverse osmosis membrane module.

3. The water treatment method according to claim 2, wherein the feed time adjusting unit comprises a feed time adjusting element, and for adjusting the feed time t, any one of the number of the feed time adjusting element, an inner volume of the feed time adjusting element, and a volume or water level of the water-to-be-treated reserved in a tank provided as the feed time adjusting element is adjusted.

4. The water treatment method according to claim 2 or 3, wherein the feed time adjusting unit comprises the feed time adjusting element, and for adjusting the feed time t, a flow channel of the water-to-be-treated in the water-to-be-treated feed line from the scale inhibitor addition point to the water-to-be-treated feed point is continuously or intermittently changed over to adjust the feed time by use of at least one of the feed time adjusting element and a bypass unit provided for bypassing the feed time adjusting element.

5. The water treatment method according to any one of claims 1 to 4, wherein at least one of a reductant and a bactericide is continuously or intermittently added to the water-to-be-treated at the scale inhibitor addition point or on an upstream side or a downstream side of the scale inhibitor addition point, while the water-to-be-treated is treated in the reverse osmosis membrane module.

6. The water treatment method according to claim 5, wherein the reductant is added after 60 seconds or more from addition of the scale inhibitor, or added before 60 seconds or more from the addition of the scale inhibitor.

**Patentansprüche**

1. Wasseraufbereitungsverfahren, umfassend:

   Zugeben eines Kesselsteininhibitors mit einer Reduktionsfunktion zu einem aufzubereitenden Wasser, das eine oxidative Substanz enthält; und

Durchführen einer Trennungsbehandlung, bei der das aufzubereitende Wasser unter Druck einem Umkehrosmose-Membranmodul durch eine Druckversorgungseinheit zugeführt wird, um das aufzubereitende Wasser in ein Konzentrat und ein Permeat zu trennen,

wobei eine Zufuhrzeit t [min] des aufzubereitenden Wassers in einer Zuleitung für aufzubereitendes Wasser von einer Kesselsteininhibitor-Zugabestelle zu einer Zufuhrstelle für aufzubereitendes Wasser in dem Umkehrosmose-Membranmodul die folgende Bedingung (1) erfüllt:

$$\text{Bedingung (1) } t \geq 5,$$

wobei die Zufuhrzeit t [min] ferner nicht kleiner ist als der kleinste Wert $t_{min}$ [min] von $t_2$ [min] oder $t_3$ [min], der jeweils in der folgenden Bedingung (2) oder (3) berechnet werden kann, wobei Cox eine Konzentration [mg/L] der oxidativen Substanz in dem aufzubereitenden Wasser bezeichnet und $C_{AS}$ eine Zugabekonzentration [mg/L] des Kesselsteininhibitors bezeichnet:

$$\text{Bedingung (2) } t_2 = 40000 \times C_{OX}/C_{AS}$$

in einem Fall, in dem Cox und $C_{AS}$ 0,01 oder mehr betragen,

$$\text{Bedingung (3) } t_3 = 400/C_{AS}$$

in einem Fall, in dem $C_{AS}$ 0,01 oder mehr beträgt, und mindestens eine einer Bedingung, dass Cox 0,01 oder weniger beträgt, und einer Bedingung, dass ein Oxidations-Reduktions-Potential 350 mV oder weniger beträgt, erfüllt ist, und wobei die Zufuhrzeit t [min] ferner nicht kleiner ist als der kleinste Wert $t_{min}$ [min] zwischen $t_4$ [min] bis $t_{11}$ [min], der jeweils in den folgenden Bedingungen (4) bis (11) berechnet werden kann, wobei Cox eine Konzentration [mg/L] der oxidativen Substanz in dem aufzubereitenden Wasser bezeichnet, $C_{AS}$ eine Zugabekonzentration [mg/L] des Kesselsteininhibitors bezeichnet, TN eine Konzentration [g/L] eines in einer unverdünnten Lösung des Kesselsteininhibitors enthaltenen Stickstoffs bezeichnet, TP eine Konzentration [g/L] eines in der unverdünnten Lösung des Kesselsteininhibitors enthaltenen Phosphors bezeichnet und TOC eine Konzentration [g/L] eines in der unverdünnten Lösung des Kesselsteininhibitors enthaltenen organischen Kohlenstoffs bezeichnet:

$$\text{Bedingung (4) } t_4 = C_{OX} \times TN \times 3650/C_{AS}$$

in einem Fall, in dem der Kesselsteininhibitor Stickstoff und Phosphor enthält, Cox und $C_{AS}$ 0,01 oder mehr betragen, und ein Verhältnis von TP/TN>6,6 erfüllt ist,

$$\text{Bedingung (5) } t_5 = C_{OX} \times TP \times 550/C_{AS}$$

in einem Fall, in dem der Kesselsteininhibitor Stickstoff und Phosphor enthält, Cox und $C_{AS}$ 0,01 oder mehr betragen und ein Verhältnis von TP/TN≤6,6 erfüllt ist,

$$\text{Bedingung (6) } t_6 = 40 \times TN/C_{AS}$$

in einem Fall, in dem der Kesselsteininhibitor Stickstoff und Phosphor enthält, $C_{AS}$ 0,01 oder mehr beträgt, mindestens eine einer Bedingung, dass Cox 0,01 oder weniger beträgt, und einer Bedingung, dass das Oxidations-Reduktions-Potential 350 mV oder weniger beträgt, erfüllt ist, und eine Beziehung von TP/TN>6,6 erfüllt ist,

$$\text{Bedingung (7) } t_7 = 5.5 \times TP/C_{AS}$$

in einem Fall, in dem der Kesselsteininhibitor Stickstoff und Phosphor enthält, $C_{AS}$ 0,01 oder mehr beträgt, mindestens eine der Bedingung, dass Cox 0,01 oder weniger beträgt, und der Bedingung, dass das Oxidations-Reduktions-Potential 350 mV oder weniger beträgt, erfüllt ist, und eine Beziehung von TP/TN≤6,6 erfüllt ist,

$$\text{Bedingung (8) } t_8 = C_{OX} \times TOC \times 2200/C_{AS}$$

in einem Fall, in dem der Kesselsteininhibitor Kohlenstoff und Phosphor enthält, Cox und $C_{AS}$ 0,01 oder mehr betragen, und ein Verhältnis von TP/TOC>10,3 erfüllt ist,

$$\text{Bedingung (9) } t_9 = C_{OX} \times TP \times 550/C_{AS}$$

in einem Fall, in dem der Kesselsteininhibitor Kohlenstoff und Phosphor enthält, Cox und $C_{AS}$ 0,01 oder mehr betragen und ein Verhältnis von TP/TOC≤10,3 erfüllt ist,

$$\text{Bedingung (10) } t_{10} = 22 \times TOC/C_{AS}$$

in einem Fall, in dem der Kesselsteininhibitor Kohlenstoff und Phosphor enthält, $C_{AS}$ 0,01 oder mehr beträgt, mindestens eine der Bedingung, dass Cox 0,01 oder weniger beträgt, und der Bedingung, dass das Oxidations-Reduktions-Potential 350 mV oder weniger beträgt, erfüllt ist und eine Beziehung von TP/TOC>10,3 erfüllt ist,

$$\text{Bedingung (11) } t_{11} = 5.5 \times TP/C_{AS}$$

in einem Fall, in dem der Kesselsteininhibitor Kohlenstoff und Phosphor enthält, $C_{AS}$ 0,01 oder mehr beträgt, mindestens eine der Bedingung, dass Cox 0,01 oder weniger beträgt, und der Bedingung, dass das Oxidations-Reduktions-Potential 350 mV oder weniger beträgt, erfüllt ist, und eine Beziehung von TP/TOC≤10,3 erfüllt ist.

2. Wasseraufbereitungsverfahren nach Anspruch 1, wobei die Zufuhrzeit t gemäß einer Bedingung durch eine Zufuhrzeit-Einstelleinheit eingestellt wird, die in der Zuleitung für aufzubereitendes Wasser von der Kesselsteininhibitor-Zugabestelle zur Zufuhrstelle für aufzubereitendes Wasser in dem Umkehrosmose-Membranmodul vorgesehen ist.

3. Wasseraufbereitungsverfahren nach Anspruch 2, wobei die Zufuhrzeit-Einstelleinheit ein Zufuhrzeit-Einstellelement umfasst, und zum Einstellen der Zufuhrzeit t eines von der Anzahl des Zufuhrzeit-Einstellelements, einem Innenvolumen des Zufuhrzeit-Einstellelements und einem Volumen oder Wasserstand des aufzubereitenden Wassers, das in einem als Zufuhrzeit-Einstellelement vorgesehenen Tank enthalten ist, eingestellt wird.

4. Wasseraufbereitungsverfahren nach Anspruch 2 oder 3, wobei die Zufuhrzeit-Einstelleinheit das Zufuhrzeit-Einstellelement umfasst und zum Einstellen der Zufuhrzeit t ein Strömungskanal des aufzubereitenden Wassers in der Zuleitung für aufzubereitendes Wasser von der Kesselsteininhibitor-Zugabestelle bis zur Zufuhrstelle für aufzubereitendes Wasser kontinuierlich oder intermittierend umgeschaltet wird, um die Zufuhrzeit unter Verwendung von mindestens einem von dem Zufuhrzeit-Einstellelement und einer zum Umgehen des Zufuhrzeit-Einstellelements vorgesehenen Umgehungseinheit einzustellen.

5. Wasseraufbereitungsverfahren nach einem der Ansprüche 1 bis 4, wobei mindestens eines von einem Reduktionsmittel und einem Bakterizid dem aufzubereitenden Wasser an der Kesselsteininhibitor-Zugabestelle oder an einer stromaufwärtigen Seite oder einer stromabwärtigen Seite der Kesselsteininhibitor-Zugabestelle kontinuierlich oder intermittierend zugegeben wird, während das aufzubereitende Wasser in dem Umkehrosmose-Membranmodul behandelt wird.

6. Wasseraufbereitungsverfahren nach Anspruch 5, wobei das Reduktionsmittel nach 60 Sekunden oder mehr ab Zugabe des Kesselsteininhibitors zugegeben wird oder vor 60 Sekunden oder mehr ab der Zugabe des Kesselsteininhibitors zugegeben wird.

**Revendications**

1. Procédé de traitement d'eau comprenant :

l'ajout d'un inhibiteur de calcaire ayant une fonction de réduction à une eau à traiter contenant une substance oxydante ; et

la réalisation d'un traitement de séparation dans lequel l'eau à traiter est fournie sous pression à un module de membrane d'osmose inverse par une unité de pressurisation et d'alimentation de manière à séparer l'eau à traiter en un concentré et un perméat,

dans lequel un temps d'alimentation t [min] de l'eau à traiter dans une conduite d'alimentation en eau à traiter depuis un point d'ajout d'inhibiteur de calcaire jusqu'à un point d'alimentation en eau à traiter dans le module de membrane d'osmose inverse satisfait la condition suivante (1) :

$$\text{Condition (1)} \quad t \geq 5,$$

dans lequel le temps d'alimentation t [min] n'est en outre pas inférieur à la plus petite valeur $t_{min}$ [min] de $t_2$ [min] ou $t_3$ [min] qui peut être calculée dans la condition suivante (2) ou (3) respectivement, où $C_{OX}$ désigne une concentration [mg/L] de la substance oxydante dans l'eau à traiter et $C_{AS}$ désigne une concentration d'addition [mg/L] de l'inhibiteur de calcaire :

$$\text{Condition (2)} \quad t_2 = 40000 \times C_{OX}/C_{AS}$$

dans un cas où $C_{OX}$ and $C_{AS}$ sont de 0,01 ou plus,

$$\text{Condition (3)} \quad t_3 = 400/C_{AS}$$

dans un cas où $C_{AS}$ est de 0,01 ou plus, et au moins l'une d'une condition selon laquelle $C_{OX}$ est de 0,01 ou moins et d'une condition selon laquelle un potentiel d'oxydo-réduction est de 350 mV ou moins est satisfaite, et dans lequel le temps d'alimentation t [min] n'est en outre pas inférieur à la plus petite valeur $t_{min}$ [min] parmi $t_4$ [min] à $t_{11}$ [min] qui peut être calculée dans les conditions suivantes (4) à (11) respectivement, où Cox désigne une concentration [mg/L] de la substance oxydante dans l'eau à traiter, $C_{AS}$ désigne une concentration d'addition [mg/L] de l'inhibiteur de calcaire, TN désigne une concentration [g/L] d'un azote contenu dans une solution non diluée de l'inhibiteur de calcaire, TP désigne une concentration [g/L] d'un phosphore contenu dans la solution non diluée de l'inhibiteur de calcaire, et TOC désigne une concentration [g/L] d'un carbone organique contenu dans la solution non diluée de l'inhibiteur de calcaire :

$$\text{Condition (4)} \quad t_4 = C_{OX} \times TN \times 3650/C_{AS}$$

dans un cas où l'inhibiteur de calcaire contient de l'azote et du phosphore, $C_{OX}$ et $C_{AS}$ sont de 0,01 ou plus, et une relation TP/TN>6,6 est satisfaite,

$$\text{Condition (5)} \quad t_5 = C_{OX} \times TP \times 550/C_{AS}$$

dans un cas où l'inhibiteur de calcaire contient de l'azote et du phosphore, $C_{OX}$ et $C_{AS}$ sont de 0,01 ou plus, et une relation TP/TN≤6,6 est satisfaite,

$$\text{Condition (6)} \quad t_6 = 40 \times TN/C_{AS}$$

dans un cas où l'inhibiteur de calcaire contient de l'azote et du phosphore, $C_{AS}$ est de 0,01 ou plus, au moins l'une d'une condition selon laquelle $C_{OX}$ est de 0,01 ou moins et d'une condition selon laquelle le potentiel d'oxydoréduction est de 350 mV ou moins est satisfaite, et une relation TP/TN>6,6 est satisfaite,

$$\text{Condition (7)} \quad t_7 = 5,5 \times TP/C_{AS}$$

dans un cas où l'inhibiteur de calcaire contient de l'azote et du phosphore, $C_{AS}$ est de 0,01 ou plus, au moins l'une de la condition selon laquelle $C_{OX}$ est de 0,01 ou moins et de la condition selon laquelle le potentiel d'oxydo-réduction est de 350 mV ou moins est satisfaite, et une relation TP/TN≤6,6 est satisfaite,

$$\text{Condition (8)} \quad t_8 = C_{OX} \times TOC \times 2200/C_{AS}$$

dans un cas où l'inhibiteur de calcaire contient du carbone et du phosphore, $C_{OX}$ et $C_{AS}$ sont de 0,01 ou plus, et une relation TP/TOC >10,3 est satisfaite,

$$\text{Condition (9)} \quad t_9 = C_{OX} \times TP \times 550/C_{AS}$$

dans un cas où l'inhibiteur de calcaire contient du carbone et du phosphore, $C_{OX}$ et $C_{AS}$ sont de 0,01 ou plus, et une relation TP/TOC≤10,3 est satisfaite,

$$\text{Condition (10)} \quad t_{10} = 22 \times TOC/C_{AS}$$

dans le cas où l'inhibiteur de calcaire contient du carbone et du phosphore, $C_{AS}$ est de 0,01 ou plus, au moins l'une de la condition selon laquelle $C_{OX}$ est de 0,01 ou moins et de la condition selon laquelle le potentiel d'oxydo-réduction est de 350 mV ou moins est satisfaite, et une relation TP/TOC>10,3 est satisfaite,

$$\text{Condition (11)} \quad t_{11} = 5,5 \times TP/C_{AS}$$

dans un cas où l'inhibiteur de calcaire contient du carbone et du phosphore, $C_{AS}$ est de 0,01 ou plus, au moins l'une de la condition selon laquelle $C_{OX}$ est de 0,01 ou moins et de la condition selon laquelle le potentiel d'oxydoréduction est de 350 mV ou moins est satisfaite, et une relation TP/TOC≤10,3 est satisfaite.

2. Procédé de traitement d'eau selon la revendication 1, dans lequel le temps d'alimentation t est ajusté en fonction d'une situation par une unité d'ajustement de temps d'alimentation fournie dans la conduite d'alimentation en eau à traiter depuis le point d'ajout d'inhibiteur de calcaire jusqu'au point d'alimentation en eau à traiter dans le module de membrane d'osmose inverse.

3. Procédé de traitement d'eau selon la revendication 2, dans lequel l'unité d'ajustement de temps d'alimentation comprend un élément d'ajustement de temps d'alimentation, et pour ajuster le temps d'alimentation t, l'un quelconque du nombre de l'élément d'ajustement de temps d'alimentation, d'un volume interne de l'élément d'ajustement de temps d'alimentation, et d'un volume ou d'un niveau d'eau de l'eau à traiter réservé dans un réservoir fourni comme l'élément d'ajustement de temps d'alimentation est ajusté.

4. Procédé de traitement d'eau selon la revendication 2 ou 3, dans lequel l'unité d'ajustement de temps d'alimentation comprend l'élément d'ajustement de temps d'alimentation, et pour ajuster le temps d'alimentation t, un canal d'écoulement de l'eau à traiter dans la conduite d'alimentation en eau à traiter depuis le point d'ajout d'inhibiteur de calcaire jusqu'au point d'alimentation en eau à traiter est commuté en continu ou par intermittence pour ajuster le temps d'alimentation en utilisant au moins l'un de l'élément d'ajustement de temps d'alimentation et d'une unité de dérivation fournie pour contourner l'élément d'ajustement de temps d'alimentation.

5. Procédé de traitement d'eau selon l'une quelconque des revendications 1 à 4, dans lequel au moins l'un d'un réducteur et d'un bactéricide est ajouté en continu ou par intermittence à l'eau à traiter au point d'ajout d'inhibiteur de calcaire ou en amont ou en aval du point d'ajout d'inhibiteur de calcaire, tandis que l'eau à traiter est traitée dans le module de membrane d'osmose inverse.

6. Procédé de traitement d'eau selon la revendication 5, dans lequel le réducteur est ajouté après 60 secondes ou plus après l'ajout de l'inhibiteur de calcaire, ou est ajouté avant 60 secondes ou plus après l'ajout de l'inhibiteur de calcaire.

FIG. 1

FIG. 2

FIG. 3

FIG. 4

FIG. 5

FIG. 6

FIG. 7

EP 3 778 496 B1

FIG. 8

FIG. 9

## REFERENCES CITED IN THE DESCRIPTION

**Patent documents cited in the description**

- WO 20171756571 A
- KR 101641083 B1
- WO 2012144384 A1
- JP 2008296188 A
- WO 2014129383 A1
- WO 2016084905 A

**Non-patent literature cited in the description**

- **M. FURUICHI et al.** Over-Eight-year Operation and Maintenance of 40,000 m3/day Seawater RO Plant in Japan. *Proc. of IDA World Congress, SP05-209,* 2005
- **TADAHIRO UEMURA et al.** Chlorine Resistance of Reverse Osmosis Membranes and Changes in Membrane Structure and Performance Caused by Chlorination Degradation. the Society of Seawater Science, 2003, vol. 57
- **YOSEF AYYASH et al.** Performance of reverse osmosis membrane in Jeddah Phase I Plant. *Desalination,* 1994, vol. 96, 215-224
- **M. NAGAI et al.** SWRO Desalination for High Salinity. *Proc. of IDA World Congress, DB09-173,* 2009